(19) 

Europäisches
Patentamt
European
Patent Office
Office européen
des brevets

(11) **EP 3 866 534 A1**

(12) **EUROPEAN PATENT APPLICATION**
published in accordance with Art. 153(4) EPC

(43) Date of publication:
**18.08.2021 Bulletin 2021/33**

(21) Application number: **19871574.0**

(22) Date of filing: **11.10.2019**

(51) Int Cl.:
***H04W 72/04*** (2009.01)

(86) International application number:
**PCT/CN2019/110588**

(87) International publication number:
**WO 2020/073987 (16.04.2020 Gazette 2020/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.10.2018 CN 201811184724
30.09.2019 CN 201910944788**

(71) Applicant: **Huawei Technologies Co., Ltd.
Shenzhen, Guangdong 518129 (CN)**

(72) Inventors:
• **WU, Ji
Shenzhen, Guangdong 518129 (CN)**
• **ZHU, Jun
Shenzhen, Guangdong 518129 (CN)**
• **JIA, Qiong
Shenzhen, Guangdong 518129 (CN)**

(74) Representative: **Gill Jennings & Every LLP
MXL
The Broadgate Tower
20 Primrose Street
London EC2A 2ES (GB)**

(54) **CONTROL RESOURCE CONFIGURATION METHOD, PARSING METHOD, AND DEVICE**

(57)    This application provides a control resource configuration method, a control resource parsing method, and a device. The configuration method includes: pre-configuring, by a network device, a plurality of control resource sets on a plurality of sub-bands, where the plurality of control resource sets have different priorities; separately performing, by the network device, channel sensing on the plurality of sub-bands, to determine one or more available sub-bands in the plurality of sub-bands; determining, by the network device, one or more to-be-scheduled control resource sets from the plurality of control resource sets based on a priority of each of the plurality of control resource sets; and sending the one or more to-be-scheduled control resource sets on the one or more available sub-bands and within corresponding channel occupancy time, where the control resource set carries downlink control information for a terminal device. A success rate of sending the CORESET is improved without increasing resources required by the CORESET.

FIG. 2

**Description**

**TECHNICAL FIELD**

This application relates to the communications field, and in particular, to a control resource configuration method, a control resource parsing method, and a device.

**BACKGROUND**

In a new radio (new radio, NR) mobile communications technology, a new control resource allocation unit, namely, a control resource set (control resource set, CORESET), is introduced and used to carry a control channel, for example, a downlink control channel (Physical downlink control channel, PDCCH). A time-frequency resource of the control resource set may be separately configured by an NR base station (gNodeB, gNB) for each user equipment (user equipment, UE). For example, the control resource set may occupy a maximum of three consecutive symbols in time domain, and occupy a maximum of 45 resource blocks (resource block, RB) in frequency domain.

An NR system working on an unlicensed (unlicensed) frequency band, referred to as an NR-U system for short, mainly aims to perform downlink data transmission with a large bandwidth. A used transmission bandwidth may be greater than 20 MHz. For a UE that is performing initial access and has not been associated with a base station, an initial bandwidth of the UE is fixed at 20 MHz. Therefore, 20 MHz is referred to as a sub-band bandwidth. Due to a feature of an unlicensed spectrum, a device uses a listen-before-talk (listen-before-talk, LBT) channel access mechanism. Before communication, the device needs to sense a channel, and can send data only after determining, through channel sensing, that the channel is idle. When an NR-U transmission bandwidth is greater than 20 MHz, the device may attempt to separately perform sensing on a plurality of 20 MHz sub-bands. An advantage is that the device may send data on only some sub-bands when sensing performed on the sub-bands succeeds. If the device performs sensing on the entire bandwidth, a sensing failure may cause the device to fail to send any data. Based on the foregoing reason, the base station usually configures the CORESET on a 20 MHz sub-band. When sensing performed on the sub-band succeeds, the base station may send a PDCCH and downlink data that are configured on the sub-band.

In the prior art, there are two control resource configuration methods. A possible method is that the CORESET is repeatedly configured on a plurality of sub-bands. For example, the device supports simultaneous communication on a maximum of four sub-bands. To prevent a configured CORESET from being affected by a sensing result, each sub-band includes a same CORESET configuration. In this case, information in the CORESET can be sent provided that sensing performed on one sub-band succeeds, and scheduling information and downlink data of the sub-band are not affected. A disadvantage of this method is that the information in the CORESET is repeated on each sub-band, and resource utilization is not high. Another possible method is that the CORESET is limited to be sent on one sub-band. A disadvantage of this method is that downlink control information (downlink control information, DCI) configured in the CORESET cannot be sent if sensing performed on the sub-band fails. Consequently, the UE cannot receive the downlink control information, and cannot correctly parse downlink data. In other words, in this case, the base station cannot perform downlink communication.

It can be seen from the above that, due to limitation of the LBT channel access mechanism, the two CORESET configuration methods mentioned in the prior art both have limitations. Therefore, an improved solution is required to improve a success rate of sending the CORESET without increasing resources required by the CORESET.

**SUMMARY**

Embodiments of this application provide a control resource configuration method, a control resource parsing method, and a device, to improve a success rate of sending a CORESET without increasing resources required by the CORESET.

According to a first aspect, a control resource configuration method is provided. A network device pre-configures a plurality of control resource sets on a plurality of sub-bands. The plurality of control resource sets have different priorities. The network device separately performs channel sensing on the plurality of sub-bands, to determine one or more available sub-bands in the plurality of sub-bands. The network device determines one or more to-be-scheduled control resource sets from the plurality of control resource sets based on a priority of each of the plurality of control resource sets, and sends the one or more to-be-scheduled control resource sets on the one or more available sub-bands and within corresponding channel occupancy time. The control resource set carries downlink control information for a terminal device.

In this embodiment of this application, the network device not only pre-configures the plurality of control resource sets that are allowed to be simultaneously sent on the plurality of sub-bands, but also pre-configures that the plurality of control resource sets have different priorities, so that the network device separately performs channel sensing on the

**EP 3 866 534 A1**

plurality of sub-bands. If a quantity of available sub-bands in the plurality of sub-bands is less than a quantity of the plurality of control resource sets, the network device selects, for the available sub-bands, some control resource sets from the plurality of control resource sets based on a priority of each of the plurality of control resource sets, and carries, within the channel occupancy time corresponding to the available sub-bands and by using the some control resource sets, the downlink control information to be sent to the terminal device, to improve a success rate of sending the CORESET without increasing resources required by the CORESET.

In addition, the network device may further send the priority of each control resource set and a correspondence between the plurality of sub-bands and the plurality of control resource sets to the terminal device associated with the network device, so that the terminal device can determine, by using a same method as the network device, a sub-band configured for a control resource set corresponding to the terminal device, and parses the downlink control information based on the configuration.

In a possible implementation, that a network device pre-configures a plurality of control resource sets on a plurality of sub-bands includes: One or more control resource sets are pre-configured on one of the plurality of sub-bands; and/or one control resource set is pre-configured on one or more sub-bands. According to this implementation, either a one-to-one correspondence or a one-to-many or many-to-one correspondence may be pre-configured between the sub-bands and the control resource sets. A configuration manner is flexible.

In a possible implementation, the priority of each of the plurality of control resource sets is updated at a predetermined time interval. Alternatively, priorities of control resource sets that are in the plurality of control resource sets and that have a same terminal device capability are updated at a predetermined time interval. The terminal device capability represents a quantity of sub-bands supported by the terminal device. According to this implementation, each control resource set can obtain a fair sending opportunity.

In a possible implementation, quantities of sub-bands supported by terminal devices corresponding to the plurality of control resource sets are different. The priorities of the plurality of control resource sets are pre-configured based on the quantities of sub-bands supported by the terminal devices corresponding to the control resource sets. For one or more terminal devices that support a smaller quantity of sub-bands, a priority of a control resource set corresponding to the one or more terminal devices is higher. According to this implementation, the network device may not need to send sensing results of the plurality of sub-bands to the terminal device, and the terminal device may determine, based on only a sensing result of a sub-band supported by the terminal device, a sub-band configured for the control resource set corresponding to the terminal device.

In a possible implementation, quantities of sub-bands supported by terminal devices corresponding to the plurality of control resource sets are different. Before the one or more to-be-scheduled control resource sets are determined from the plurality of control resource sets, the method further includes: The network device sends sensing results of the plurality of sub-bands to each terminal device. According to this implementation, the network device sends the sensing results of the plurality of sub-bands to each terminal device, so that the network device can flexibly configure the priority of each of the plurality of control resource sets.

In a possible implementation, a plurality of sub-bands that can be configured for the control resource set have different priorities. The network device determines, based on a priority of each sub-band that is in the available sub-bands and that can be configured for the control resource set, a sub-band used to send the control resource set. According to this implementation, when a quantity of the sub-bands that can be configured for the control resource set is greater than 1, a corresponding configuration manner is provided.

In a possible implementation, the network device determines that a pre-configured first sub-band used to send the control resource set is different from a second sub-band that is configured based on a sensing result and used to send the control resource set, and sends, on the second sub-band, downlink data pre-configured on the first sub-band. According to this implementation, when frequency domain migration is performed on a control resource set due to LBT, downlink data that is pre-configured on a same sub-band as the control resource set is also migrated to a new sub-band simultaneously. Therefore, the network device does not need to generate new data simultaneously.

In a possible implementation, the downlink control information includes downlink scheduling information or a system message. When the plurality of control resource sets include a control resource set used to carry the system message, the control resource set used to carry the system message is selected from the plurality of control resource sets, and a sub-band corresponding to the control resource set used to carry the system message is selected from the available sub-bands. The network device selects, from a plurality of remaining control resource sets and based on a priority of each of the plurality of remaining control resource sets after selection, one or more control resource sets for a remaining available sub-band after selection. According to this implementation, the control resource set used to carry the system message is always preferentially configured, and a correspondence between the control resource set and the sub-band does not change with the sensing result.

According to a second aspect, a control resource parsing method is provided. A terminal device pre-obtains configuration information of a network device. The configuration information is used to indicate that the network device pre-configures a plurality of control resource sets on a plurality of sub-bands, and the plurality of control resource sets

3

have different priorities. The method includes: The terminal device obtains at least a sensing result of a sub-band supported by the terminal device in the plurality of sub-bands. The sensing result is used to determine one or more available sub-bands in the plurality of sub-bands. The terminal device determines, based on at least the sensing result and a priority of each of the plurality of control resource sets, an actually configured sub-band of a control resource set corresponding to the terminal device; and receives, from the network device within channel occupancy time corresponding to the actually configured sub-band, downlink control information carried on the control resource set. The terminal device parses the downlink control information.

In this embodiment of this application, the terminal device receives the priority of each control resource set and a correspondence between the plurality of sub-bands and the plurality of control resource sets from the network device in advance, so that the terminal device can determine, by using a same method as the network device, a sub-band configured for the control resource set corresponding to the terminal device, and parses the downlink control information based on the configuration.

In a possible implementation, quantities of sub-bands supported by terminal devices corresponding to the plurality of control resource sets are different. The terminal device receives sensing results of the plurality of sub-bands from the network device. According to this implementation, the terminal device receives the sensing results of the plurality of sub-bands from the network device, so that the network device can flexibly configure the priority of each of the plurality of control resource sets.

In a possible implementation, a plurality of sub-bands that can be configured for the control resource set have different priorities. Based on the priority of each of the plurality of control resource sets and a priority of each sub-band that is in the available sub-bands and that can be configured for the control resource set, the terminal device determines one or more to-be-scheduled control resource sets that are for the available sub-bands and that are determined by the network device from the plurality of control resource sets, and determines a sub-band configured for each of the one or more control resource sets. According to this implementation, when a quantity of the sub-bands that can be configured for the control resource set is greater than 1, the terminal device can determine a corresponding configuration manner.

In a possible implementation, when determining that a pre-configured first sub-band used to send the control resource set corresponding to the terminal device is different from a second sub-band that is configured based on the sensing result and used to send the control resource set, the terminal device receives, on the second sub-band, downlink data pre-configured on the first sub-band. According to this implementation, when frequency domain migration is performed on a control resource set due to LBT, downlink data that is pre-configured on a same sub-band as the control resource set is also migrated to a new sub-band simultaneously, so that the terminal device can simultaneously receive the downlink data.

In a possible implementation, the downlink control information includes downlink scheduling information or a system message. When the plurality of control resource sets include a control resource set used to carry the system message, the terminal device selects the control resource set used to carry the system message from the plurality of control resource sets, and selects a sub-band corresponding to the control resource set used to carry the system message from the available sub-bands. The terminal device selects, from a plurality of remaining control resource sets after selection and based on a priority of each of the plurality of remaining control resource sets, one or more control resource sets for a remaining available sub-band after selection. According to this implementation, the control resource set used to carry the system message is always preferentially configured, and a correspondence between the control resource set and the sub-band does not change with the sensing result. In this way, the terminal device can correctly receive the system message.

According to a third aspect, an embodiment of this application provides a network device. The network device may implement a function performed in the method design in the first aspect, and the function may be implemented by hardware, or may be implemented by hardware executing corresponding software. The hardware or software includes one or more modules corresponding to the function.

In a possible design, a structure of the network device includes a processor, and the processor is configured to support the network device in performing a corresponding function in the method in the first aspect. The network device may further include a memory. The memory is configured to be coupled to the processor, and the memory stores program instructions and data that are necessary for the network device. The network device may further include a communications interface, and the communications interface is configured to send or receive information or the like.

According to a fourth aspect, an embodiment of this application provides a terminal device. The terminal device may implement a function performed in the method design in the second aspect, and the function may be implemented by hardware, or may be implemented by hardware executing corresponding software. The hardware or software includes one or more modules corresponding to the function.

In a possible design, a structure of the terminal device includes a processor, and the processor is configured to support the terminal device in performing a corresponding function in the method in the second aspect. The terminal device may further include a memory. The memory is configured to couple to the processor, and the memory stores program instructions and data that are necessary for the terminal device. The terminal device may further include a communications interface, and the communications interface is configured to send or receive information or the like.

According to a fifth aspect, an embodiment of this application provides a communications apparatus. The communications apparatus may be, for example, a chip. The communications apparatus may be disposed in a network device, and the communications apparatus includes a processor and an interface. The processor is configured to support the communications apparatus in performing a corresponding function in the method according to the first aspect. The interface is configured to support communication between the communications apparatus and another communications apparatus or another network element. The communications apparatus may further include a memory. The memory is configured to couple to the processor, and the memory stores program instructions and data that are necessary for the communications apparatus.

According to a sixth aspect, an embodiment of this application provides a communications apparatus. The communications apparatus may be, for example, a chip. The communications apparatus may be disposed in a terminal device, and the communications apparatus includes a processor and an interface. The processor is configured to support the communications apparatus in performing a corresponding function in the method according to the second aspect. The interface is configured to support communication between the communications apparatus and another communications apparatus or another network element. The communications apparatus may further include a memory. The memory is configured to couple to the processor, and the memory stores program instructions and data that are necessary for the communications apparatus.

According to a seventh aspect, an embodiment of this application provides a computer storage medium. The computer storage medium stores instructions. When the instructions are run on a computer, the computer is enabled to perform the method according to the first aspect or any possible design of the first aspect or the method according to the second aspect or any possible design of the second aspect.

According to an eighth aspect, an embodiment of this application provides a computer program product, including instructions. When the program is executed by a computer, the instructions enable the computer to perform the method according to the first aspect or any possible design of the first aspect, or the method according to the second aspect or any possible design of the second aspect.

According to a ninth aspect, an embodiment of this application provides a computer program, including instructions. When the program is executed by a computer, the instructions enable the computer to perform the method according to the first aspect or any possible design of the first aspect, or the method according to the second aspect or any possible design of the second aspect.

According to the methods and the apparatuses provided in the embodiments of this application, a network device may flexibly configure, according to a preset rule, a control resource set based on a sensing result. Correspondingly, a terminal device may determine, by using a same method as the network device, a sub-band configured for a control resource set corresponding to the terminal device, and parse downlink control information based on the configuration. This improves a success rate of sending the CORESET without increasing resources required by the CORESET.

**BRIEF DESCRIPTION OF DRAWINGS**

FIG. 1 is a schematic diagram of a system architecture according to an embodiment of this application;
FIG. 2 is a flowchart of a control resource configuration method according to an embodiment of this application;
FIG. 3 is a schematic diagram of a type-A LBT channel access mechanism;
FIG. 4 is a schematic diagram of a type-B LBT channel access mechanism;
FIG. 5 is a schematic diagram of a control resource configuration implementation method according to an embodiment of this application;
FIG. 6 is a schematic diagram of a dynamic PDSCH adjustment method according to an embodiment of this application;
FIG. 7 is a schematic diagram of another dynamic PDSCH adjustment method according to an embodiment of this application;
FIG. 8 is a schematic diagram of another CORESET configuration implementation method according to an embodiment of this application;
FIG. 9 is a schematic diagram of another CORESET configuration implementation method according to an embodiment of this application;
FIG. 10 is a schematic diagram of another CORESET configuration implementation method according to an embodiment of this application;
FIG. 11 is a schematic diagram of another CORESET configuration implementation method according to an embodiment of this application;
FIG. 12 is a schematic block diagram of a network device according to an embodiment of this application;

FIG. 13 is a schematic block diagram of another network device according to an embodiment of this application;

FIG. 14 is a schematic block diagram of a terminal device according to an embodiment of this application;

FIG. 15 is a schematic block diagram of another terminal device according to an embodiment of this application;

FIG. 16 is a schematic block diagram of a communications apparatus according to an embodiment of this application;

FIG. 17 is a schematic block diagram of another communications apparatus according to an embodiment of this application;

FIG. 18 is a schematic block diagram of another communications apparatus according to an embodiment of this application;

FIG. 19 is a flowchart of a method according to an embodiment of this application;

FIG. 20 is a schematic diagram of a PDCCH candidate in a monitoring periodicity according to an embodiment of this application;

FIG. 21 is a schematic diagram of sub-band monitoring according to an embodiment of this application; and

FIG. 22 is a schematic diagram of a start boundary of an offset monitoring location according to an embodiment of this application.

## DESCRIPTION OF EMBODIMENTS

The following describes technical solutions of this application with reference to accompanying drawings.

In an embodiment of this application, for a limitation of an LBT channel access mechanism, a control resource configuration method is provided. A network device (for example, a 5G base station gNB) pre-configures a plurality of control resource sets on a plurality of sub-bands, that is, configures a correspondence between a sub-band set and a set of control resource sets. In other words, one or more control resource sets that can be sent in parallel on the sub-bands may be pre-configured. Optionally, a specific sub-band on which a control resource set is sent may also be pre-configured. After an available sub-band in the plurality of sub-bands is subsequently determined based on a sensing result, if a quantity of available sub-bands is less than a quantity of the plurality of control resource sets, the network device selects some control resource sets from the plurality of control resource sets for the available sub-band based on a priority of each of the plurality of control resource sets; and carries, on the some control resource sets within channel occupancy time corresponding to the sensing result, downlink control information to be sent to a corresponding terminal device. It can be learned from the foregoing that, in one aspect, the plurality of control resource sets are pre-configured on the plurality of sub-bands, instead of only one control resource set, so that resource utilization is high; and in another aspect, the correspondence between the sub-band set and the set of control resource sets is pre-configured, and a correspondence between the control resource set and the available sub-band is flexibly determined subsequently based on the sensing result. In this way, a success rate of sending the CORESET is improved without increasing resources required by the CORESET.

A sub-band in each implementation of this application may be a minimum bandwidth for performing LBT, for example, 20 MHz, 5 MHz, 10 MHz, or 40 MHz.

It may be understood that the network device is an entity configured to transmit or receive a signal on a network side, for example, the gNB. The terminal device is an entity configured to receive or transmit a signal on a user side, for example, a UE such as a mobile phone.

The CORESET is a new concept introduced in an NR technology. In an NR system, the UE can successfully decode a PDCCH only when the UE knows a location of the PDCCH in frequency domain and a location of the PDCCH in time domain. The CORESET is essentially a time-frequency resource, and the time-frequency resource is used to carry a PDCCH of one or more UEs. When configuring the CORESET for the UE, the gNB configures a time domain size (duration) and a frequency domain range (a quantity of occupied RBs) of the CORESET, and further configures a search space corresponding to the CORESET to indicate a time domain start symbol and a time domain occurrence periodicity of the CORESET. The UE can find a correct time-frequency resource of the CORESET only by using the two parts of information, and then can blindly monitor PDCCH information of the UE in the time-frequency resource. Therefore, improving the success rate of sending the CORESET is significant for the UE to successfully decode the PDCCH.

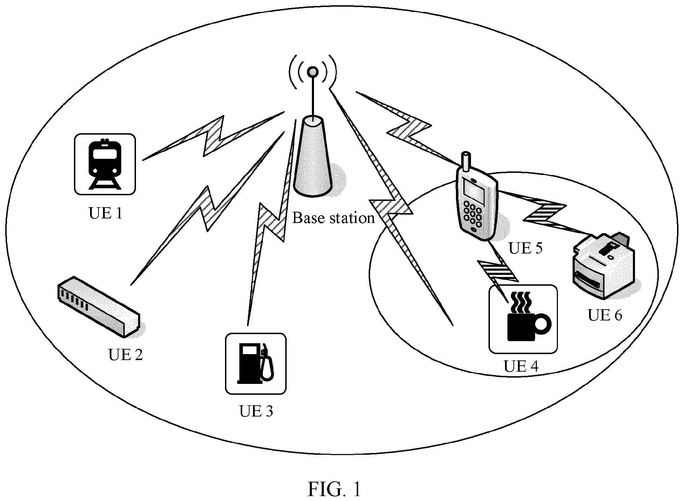

FIG. 1 is a schematic diagram of a system architecture according to an embodiment of this application. This embodiment of this application is mainly applied to an NR-U system. When another system also needs to use a plurality of beams (beam) to send control information and/or data, this embodiment of this application may also be applied to another unlicensed communications system. As shown in FIG. 1, a base station (Base station) and a UE 1 to a UE 6 form a communications system. In the communications system, the UE 1 to the UE 6 may send uplink data to the base station, and the base station needs to receive the uplink data sent by the UE 1 to the UE 6. In addition, the UE 4 to the UE 6 may also constitute a communications system. In the communications system, the base station may send downlink information to the UE 1, the UE 2, the UE 5, and the like. The UE 5 may also send downlink information to the UE 4 and the UE 6.

Based on the system architecture shown in FIG. 1, the control resource configuration method provided in the embodiments of this application is mainly used by the base station to configure a correspondence between a control resource set corresponding to each UE and a sub-band supported by the base station.

The control resource configuration method provided in the embodiments of this application may be applicable to any LBT channel access mechanism, for example, a type (type)-A or a type-B multi-carrier LBT channel access mechanism.

A device on an unlicensed band (unlicensed band) may monitor, without authorization, whether a channel is idle and access the channel to work. To ensure coexistence with another device that works on the unlicensed band, an LBT channel contention access mechanism is used.

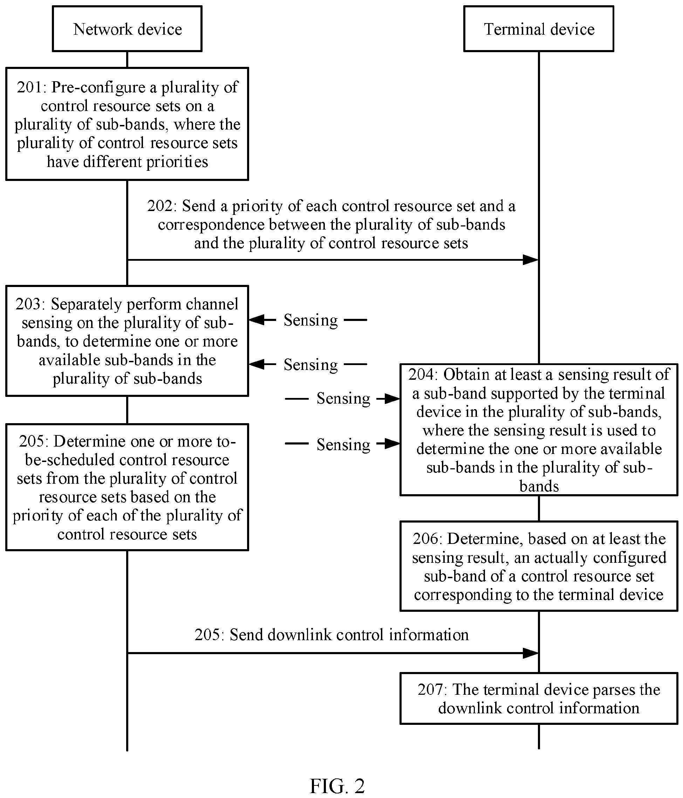

FIG. 2 is a flowchart of a control resource configuration method according to an embodiment of this application. This embodiment may be based on the system architecture shown in FIG. 1, and may include the following operation procedure.

Step 201: A network device pre-configures a plurality of control resource sets on a plurality of sub-bands, where the plurality of control resource sets have different priorities, and one or more control resource sets may be pre-configured on one of the plurality of sub-bands, and/or one control resource set may be pre-configured on one or more sub-bands.

A priority of a control resource set refers to a scheduling sequence of all a plurality of CORESETs that may be transmitted (sent or received) at a moment, and a gNB preferentially sends a CORESET with a higher priority (in a higher sequence) according to the sequence. When available sub-bands are limited or not enough to send all the CORESETs, a CORESET with a lower priority may not be sent because there are not enough available sub-bands.

(For details, refer to step 205.)

In a possible implementation, one control resource set CORESET may be pre-configured on a plurality of sub-bands, and a sequence of the sub-bands used for sending the CORESET may further be agreed on in advance, and may be referred to as a sub-band priority. Subsequently, in available sub-bands, a sub-band with a highest priority is used to send the CORESET, and the CORESET does not need to be sent on another sub-band. (For details, refer to step 205.)

In a possible implementation, a priority of each of the plurality of control resource sets is updated at a predetermined time interval. According to this implementation, each control resource set can obtain a fair sending opportunity.

It should be noted that a terminal device may configure a plurality of CORESETs. For example, one CORESET is used to schedule downlink data, and another CORESET is used to schedule system information. A priority of the CORESET used to schedule system information may be the same for all terminal devices. Quantities of sub-bands supported by the terminal devices may be the same or different. For example, sub-bands supported by the network device include a sub-band 0, a sub-band 1, a sub-band 2, and a sub-band 3. In other words, the network device supports four sub-bands. Three control resource sets are pre-configured, and the three control resource sets respectively correspond to a UE 1, a UE 2, and a UE 3, and are denoted as a CORESET UE 1, a CORESET UE 2, and a CORESET UE 3. There may be a plurality of correspondences between the plurality of sub-bands and the plurality of control resource sets. For example: The CORESET UE 1, the CORESET UE 2, and the CORESET UE 3 separately correspond to all sub-bands, namely, the sub-band 0, the sub-band 1, the sub-band 2, and the sub-band 3. It may be understood that the UE 1, the UE 2, and the UE 3 each may support the sub-band 0, the sub-band 1, the sub-band 2, and the sub-band 3. In this case, quantities of sub-bands supported by the UEs are the same. In other words, the UEs have a same capability. Alternatively, the CORESET UE 1 corresponds to the sub-band 0, the sub-band 1, the sub-band 2, and the sub-band 3, the CORESET UE 2 corresponds to the sub-band 0, the sub-band 1, and the sub-band 2, and the CORESET UE 3 corresponds to the sub-band 0 and the sub-band 1. It may also be understood that the UE 1 supports the sub-band 0, the sub-band 1, the sub-band 2, and the sub-band 3, the UE 2 supports the sub-band 0, the sub-band 1, and the sub-band 2, and the UE 3 supports the sub-band 0 and the sub-band 1. In this case, the quantities of sub-bands supported by the UEs are different. In other words, the UEs have different capabilities.

When the UEs have the same capability, the priority of each control resource set is set flexibly. In other words, a scheduling sequence of the control resource sets may be set in various manners. Generally, only fairness needs to be considered. For example, a random setting manner is used and periodically or irregularly updated.

When the UEs have different capabilities, some UEs cannot obtain sensing results of the plurality of sub-bands by using capabilities of the UEs, and can obtain only sensing results of sub-bands supported by the UEs. Therefore, to ensure that the UEs and the network device can determine a same control resource configuration manner, two means may be used. One is that the network device sends the sensing results of the plurality of sub-bands to each UE, to overcome a problem that some UEs have insufficient capabilities. The other is that the capabilities of the UEs are considered when the priorities of the control resource sets are set.

In a possible implementation, quantities of sub-bands supported by terminal devices corresponding to the plurality of control resource sets are different. The priorities of the plurality of control resource sets are pre-configured based on the quantities of sub-bands supported by the terminal devices corresponding to the control resource sets. A smaller quantity of sub-bands supported by a terminal device indicates a higher priority of a control resource set corresponding to the terminal device. According to this implementation, the network device may not need to send the sensing results of the plurality of sub-bands to the terminal device, and the terminal device may determine, based on only a sensing result of a sub-band supported by the terminal device, a sub-band configured for the control resource set corresponding to the terminal device.

In a possible implementation, quantities of sub-bands supported by terminal devices corresponding to the plurality of control resource sets are different. Before some control resource sets are selected from the plurality of control resource sets for the available sub-bands, the network device sends the sensing results of the plurality of sub-bands to each terminal device. According to this implementation, the network device sends the sensing results of the plurality of sub-bands to each terminal device, so that the network device can flexibly configure the priority of each of the plurality of control resource sets.

Step 202: The network device sends the priority of each control resource set and a correspondence between the plurality of sub-bands and the plurality of control resource sets to a terminal device associated with the network device.

Optionally, when a quantity of sub-bands supported by each terminal device is greater than 1, a priority of each of a plurality of sub-bands supported by each terminal device may further be sent. Specifically, the correspondence between the plurality of sub-bands and the plurality of control resource sets, a priority of a CORESET of the UE, and a priority of a corresponding sub-band may be notified by using RRC or other common signaling (one or more pieces of signaling) in a manner mentioned below. Details are not described herein.

Specifically, the priority of the control resource set may be an implicit indication based on information related to the control resource set. For example, an identifier ID of the control resource set is used to implicitly indicate a scheduling sequence of the control resource set. For example, a smaller ID indicates an earlier scheduling sequence (a higher priority).

Step 203: The network device separately performs channel sensing on the plurality of sub-bands, to determine one or more available sub-bands in the plurality of sub-bands.

When separately performing channel sensing on the plurality of sub-bands, the network device may use a type-A LBT channel access mechanism or a type-B LBT channel access mechanism.

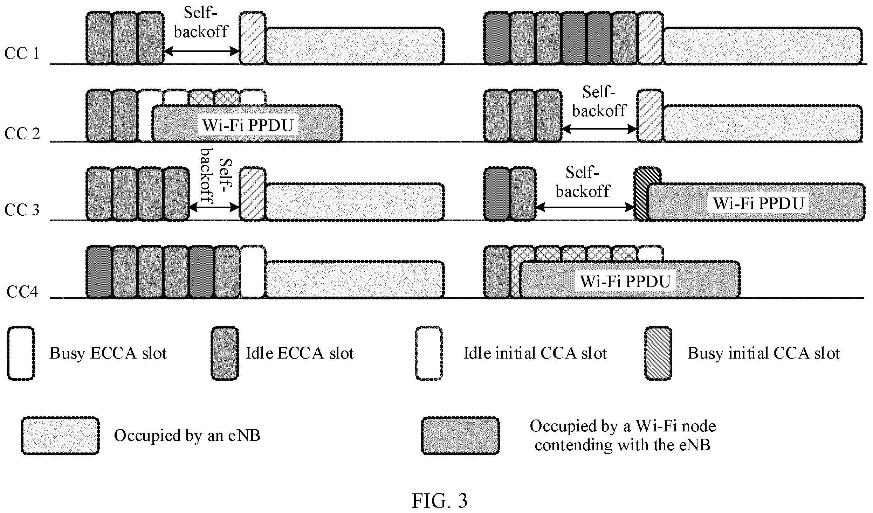

FIG. 3 is a schematic diagram of the type-A LBT channel access mechanism. Before performing LBT, a device that performs type-A LBT first determines a backoff priority based on importance of to-be-sent data and a size of the data, and randomly selects a backoff count based on the priority. The backoff count is a quantity of slots that the device needs to wait after the device senses that a channel is idle in FIG. 3. For example, before sending data, a device on a component carrier (component carrier, CC) 4 needs to sense that a channel is idle in continuously seven slots. The device may perform independent backoff on a plurality of CCs, and after completing backoff on a carrier, the device waits for another carrier on which backoff is still performed. After backoff is completed on all carriers on which LBT is performed, a base station needs to perform clear channel assessment (clear channel assessment, CCA) of an extra slot, which is also referred to as replaying. To be specific, monitoring is performed backward at an end moment of a last backoff slot, to ensure that all the carriers are idle. If all the carriers are idle, the base station performs transmission on all the idle carriers simultaneously.

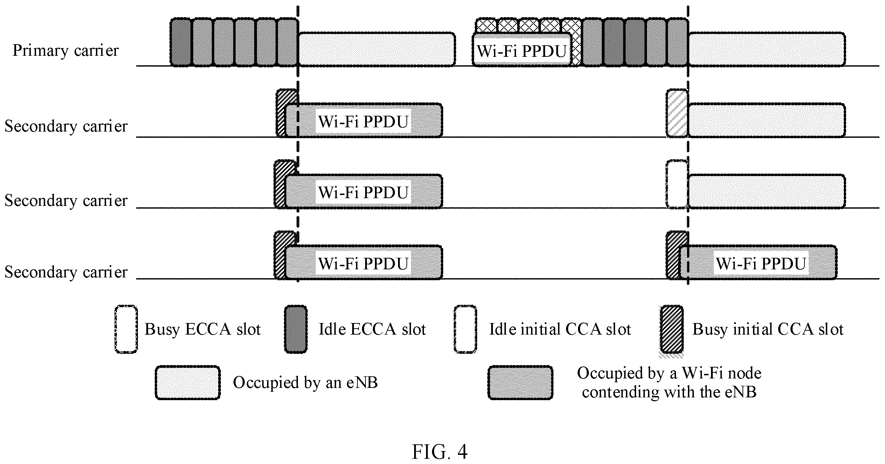

FIG. 4 is a schematic diagram of the type-B LBT channel access mechanism. A type-B LBT device performs backoff only on a randomly selected carrier. As shown in FIG. 4, the base station selects only a primary carrier to perform backoff sensing. When the backoff ends, CCA of one slot is performed on another secondary carrier, which is also referred to as replaying. If the carrier is idle, data transmission is performed. If the carrier is not idle, transmission cannot be performed on the carrier at this time.

With the LBT channel access mechanism, after preempting a channel, a gNB in an NR-U system may occupy the channel for downlink transmission within a period of time, or may schedule a UE associated with the gNB for uplink transmission. Channel occupancy time (channel occupancy time, COT) of the gNB is related to a priority of performing LBT by the gNB. A lower LBT priority indicates longer time that a channel can be occupied after the channel is preempted. Maximum channel occupancy time supported in the NR-U is 10 ms. After obtaining the channel, the gNB may notify the UE of a start moment and/or duration of the COT by using a downlink (downlink, DL) identification signal (identification signal) such as a wideband (wideband) demodulation reference signal (demodulation reference signal, DMRS), request to send (request to send, RTS) or clear to send (clear to send, CTS) signaling, a group common downlink control channel (group-common PDCCH, GC-PDCCH), or another manner. In addition, the UE may further learn an LBT status (success or failure) of each sub-band at the moment by using the foregoing information.

Step 204: The terminal device obtains at least a sensing result of a sub-band supported by the terminal device in the plurality of sub-bands, where the sensing result is used to determine one or more available sub-bands in the plurality of sub-bands.

It should be noted that the terminal device may obtain, through sensing, the sensing result of the sub-band supported by the terminal device. Because a capability of a terminal device is limited, some terminal devices support only some of the plurality of sub-bands. In this case, the terminal device can obtain only sensing results of the some sub-bands through sensing. In addition, the terminal device may further receive the sensing results of the plurality of sub-bands from the network device.

In a possible implementation, quantities of sub-bands supported by terminal devices corresponding to the plurality of control resource sets are different. The terminal device receives the sensing results of the plurality of sub-bands from the network device. According to this implementation, the terminal device receives the sensing results of the plurality of sub-bands from the network device, so that the network device can flexibly configure the priority of each of the plurality of control resource sets.

The sensing results received by the terminal device from the network device may include a sub-band number of an available sub-band in the plurality of sub-bands and/or a sub-band number of an unavailable sub-band in the plurality of sub-bands.

Step 205: The network device determines one or more to-be-scheduled control resource sets from the plurality of control resource sets based on a scheduling sequence of the control resource set (namely, a priority of each control resource set) in the plurality of control resource sets, and sends, based on one or more pre-configured (corresponding) sub-bands of the control resource sets, the one or more determined to-be-scheduled control resource sets on the one or more available sub-bands determined in step 204 and within corresponding channel occupancy time, where the control resource set carries downlink control information for the terminal device.

Optionally, if there are a plurality of available sub-bands in a plurality of pre-configured (corresponding) sub-bands of a determined to-be-scheduled control resource set, the network device may further determine, based on priorities (use sequence) of the plurality of sub-bands of the control resource set, a sub-band used to send the control resource set.

According to this implementation, when a quantity of sub-bands that can be configured for the control resource set is greater than 1, the control resource set is sent on an available sub-band with a highest priority. The control resource set does not need to be sent on another sub-band, so that communication resources can be reduced. For example, the CORESET UE 1 corresponds to the sub-bands 0, 2, and 3, and sub-band priorities of the sub-bands are {2, 3, 0}. When the gNB can use only the sub-bands 0, 1, and 3 for transmission, the CORESET UE 1 is sent on the sub-band 3.

It may be understood that in this embodiment of this application, configuration of a control resource is involved, and because the configuration of the control resource has a correlation with a configuration of downlink data, correspondingly, the configuration of the downlink data is also involved.

In a possible implementation, the network device determines that a pre-configured first sub-band used to send the control resource set may be different from a second sub-band that is configured based on the sensing result and used to send the control resource set. In this case, in this implementation, the method further includes: sending, on the second sub-band, downlink data pre-configured on the first sub-band. For example, the CORESET UE 1 is configured to be sent on the sub-band 0. When transmission cannot be performed on the sub-band 0 because LBT performed on the sub-band 0 fails, the gNB migrates the CORESET UE 1 and a PDSCH that is pre-configured on the sub-band 0 to another sub-band, for example, the sub-band 1, for transmission. According to this implementation, when frequency domain migration is performed on a control resource set due to LBT, downlink data that is pre-configured on a same sub-band as the control resource set is also migrated to a new sub-band simultaneously. Therefore, the network device does not need to generate new data simultaneously.

In a possible implementation, the downlink control information includes downlink scheduling information or a system message (namely, a message carried on a type-0 or a type-1 PDCCH). A control resource set that carries the system information has a highest priority. To be specific, when the plurality of control resource sets include the control resource set used to carry the system message, the control resource set used to carry the system message is selected from the plurality of control resource sets, and a sub-band corresponding to the control resource set used to carry the system message is selected from the available sub-bands. The network device selects, from a plurality of remaining control resource sets after selection and based on a scheduling sequence (priority) of each of the plurality of remaining control resource sets, one or more control resource sets for a remaining available sub-band after selection. According to this implementation, the control resource set used to carry the system message is always preferentially configured, and a correspondence between the control resource set and the sub-band does not change with the sensing result.

Step 206: The terminal device determines, based on at least the sensing result, an actually configured sub-band of a control resource set corresponding to the terminal device, and receives, through the control resource set, the downlink control information from the network device within channel occupancy time corresponding to the actually configured sub-band.

In a possible implementation, the terminal device determines, in a manner or principle consistent with that of the network device, the sub-band on which the control resource set is actually configured, so as to receive, on the corresponding sub-band, the downlink control information carried on the control resource set. For example, based on the scheduling sequence of the control resource set (the priority of each control resource set) in the plurality of control resource sets, a sequence of the sub-band (a priority of each sub-band) in the plurality of sub-bands that can be configured for the control resource set, and information about the available sub-bands in the foregoing sensing result, the terminal device determines one or more control resource sets to be scheduled by the network device and a sub-band configured for each to-be-scheduled control resource set.

According to this implementation, when the quantity of sub-bands that can be configured for the control resource set is greater than 1, the terminal device receives, on an available sub-band with a highest priority, the information carried on the control resource set. There is no need to attempt to receive the control resource set on another sub-band, so that communication resources can be reduced.

In a possible implementation, when determining that a pre-configured first sub-band used to send the control resource set corresponding to the terminal device is different from a second sub-band that is configured based on the sensing result and used to send the control resource set, the terminal device determines to receive, on the second sub-band, downlink data pre-configured on the first sub-band. According to this implementation, when frequency domain is performed on a control resource set due to LBT, downlink data that is pre-configured on a same sub-band as the control resource set is also migrated to a new sub-band simultaneously, so that the terminal device can simultaneously receive the downlink data.

In a possible implementation, the downlink control information includes downlink scheduling information or a system message. When the plurality of control resource sets include a control resource set used to carry the system message, the terminal device selects the control resource set used to carry the system message from the plurality of control resource sets, and selects a sub-band corresponding to the control resource set used to carry the system message from the available sub-bands. The terminal device selects, from a plurality of remaining control resource sets after selection and based on a priority of each of the plurality of remaining control resource sets, some control resource sets for a remaining available sub-band after selection. According to this implementation, the control resource set used to carry the system message is always preferentially configured, and a correspondence between the control resource set and the sub-band does not change with the sensing result. In this way, the terminal device can correctly receive the system message.

Step 207: The terminal device parses the downlink control information.

It may be understood that after determining the sub-band configured for the control resource set corresponding to the terminal device, the terminal device may receive and parse the downlink control information on the corresponding sub-band.

According to the method and the apparatuses provided in this embodiment of this application, the network device may flexibly configure, according to a preset rule, a control resource set based on a sensing result. Correspondingly, the terminal device may determine, by using a same method as the network device, the sub-band configured for the control resource set corresponding to the terminal device, and parse the downlink control information based on the configuration. This improves a success rate of sending the CORESET without increasing resources required by the CORESET.

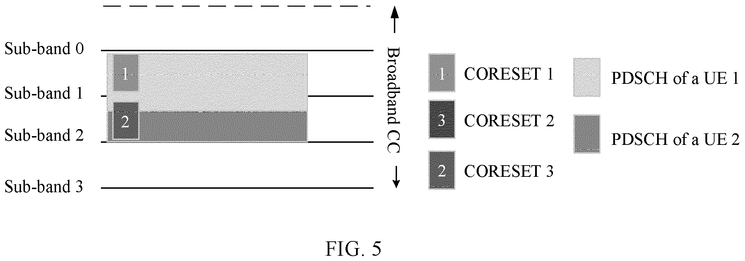

FIG. 5 is a schematic diagram of a CORESET configuration implementation method according to an embodiment of this application. As shown in FIG. 5, downlink control information for different UEs exists in different CORESETs. For example, a UE 1 corresponds to a CORESET 1, a UE 2 corresponds to a CORESET 3, and a UE 3 corresponds to a CORESET 2. A gNB informs a UE of a configuration set of a CORESET (including a configuration of a search space of the CORESET) by using radio resource control (radio resource control, RRC) signaling. The configuration set includes a CORESET corresponding to the UE and another CORESET that may appear at the same time as the CORESET.

Because the gNB needs to use different beamforming (beamforming) to perform downlink transmission for different users, to achieve a higher signal-to-noise ratio and higher transmission efficiency, different CORESETs are usually configured on different sub-bands.

After the gNB performs LBT, a quantity of available sub-bands may be less than a quantity of sub-bands on which CORESETs are pre-configured. In this case, the gNB needs to re-determine, according to a specific rule, whether each CORESET is sent and a specific sub-band used to send the CORESET. The UE may determine, according to the rule and an LBT status of a current sub-band, sub-bands on which the CORESET corresponding to the UE and the another CORESET may appear. The UE may obtain downlink data scheduling information based on a determined sub-band on which the CORESET of the UE appears, and the UE may perform, based on a determined sub-band on which the another CORESET appears, rate matching (rate matching) when parsing downlink data.

Considering fairness, priorities of different CORESETs may be adjusted periodically or aperiodically and notified to the UE. For example, the priority of the CORESET may be notified based on a system frame number (system frame number), or may be notified by using DCI or RRC signaling.

For example, when configuring an initial priority for the CORESET, the gNB may configure a time interval of priority update at the same time. For example, if the initial priority is CORESET {1, 3, 2}, and the time interval is 20 ms, the priority of the CORESET is updated every 20 ms. Current time may be indicated by using a system frame number (system frame number, SFN). For example, it is preset that priorities of three CORESETs are {1, 3, 2} when SFN = T; the priorities of the three CORESETs are {3, 2, 1} when SFN = T + 2; the priorities of the three CORESETs are {2, 1, 3} when SFN = T + 4; and the priorities of the three CORESETs are {1, 3, 2} when SFN = T + 6. The priorities of the CORESETs are repeated in the foregoing sequence. In addition, the gNB may further dynamically update, by using signaling such as RRC signaling and DCI signaling, one or more of a CORESET priority and a CORESET priority adjustment periodicity.

FIG. 5 is a schematic diagram of a control resource configuration implementation method according to an embodiment of this application. A gNB configures three CORESETs for a plurality of sub-bands (sub-bands 0, 1, 2, and 3) supported by the gNB. At a specific moment, only LBT performed on the sub-band 1 and the sub-band 2 succeeds. When all UEs support four sub-bands for communication, it is assumed that in this case, a CORESET 1 has a highest priority, a CORESET 3 has a second highest priority, and a CORESET 2 has a lowest priority.

Referring to step 205, the gNB determines, based on the priorities of the CORESETs, that to-be-scheduled CORESETs are the CORESET 1 and the CORESET 3, and no sub-band can be configured for the CORESET 2. The gNB may send the CORESETs in ascending order of sub-band IDs. In this case, the gNB configures the CORESET 1 on the sub-band 1, and configures the CORESET 3 on the sub-band 2. Alternatively, the gNB may send the CORESETs in descending order of the sub-band IDs. In this case, the gNB configures the CORESET 3 on the sub-band 1, and configures the CORESET 1 on the sub-band 2. The gNB may use either of the foregoing two manners to perform CORESET configuration/sending. However, the gNB needs to notify the UE in advance of this manner, or this manner is directly specified in a standard.

In the foregoing implementation shown in FIG. 5, because some physical downlink shared channels (physical downlink shared channel, PDSCH) of the UE 1 overlap with the CORESET 3, the UE 1 may perform correct rate matching (rate-matching) based on a configuration of the CORESET 3 and a frequency domain location (the sub-band 2) of the CORESET 3. In other words, an overlapping time-frequency resource between the PDSCHs and the CORESET 3 is not used to transmit downlink data of the UE 1. A specific procedure is as follows: The UE 1 learns, by using information about a CORESET configured by the gNB for the UE 1 and a priority of the CORESET, and a current LBT status (only LBT performed on the sub-bands 1 and 2 succeeds), that the CORESET 1 corresponding to the UE 1 is located on the sub-band 1, and the CORESET 2 is to be configured on the sub-band 2. In addition, the UE 1 knows a time-frequency location of the CORESET 2 on the sub-band 2. After reading PDCCH information carried on the CORESET 1, the UE 1 obtains a time-frequency resource location of a downlink data PDSCH corresponding to the UE 1, and finds that part of the time-frequency resource location overlaps a time-frequency resource location of the CORESET 2. In this case, the UE 1 knows that the gNB does not send the downlink data of the UE 1 on the overlapping time-frequency resource. Therefore, an actual time-frequency resource of the downlink data PDSCH of the UE 1 is a time-frequency resource indicated by a PDCCH minus a part of time-frequency resource overlapping with the CORESET 2. The UE 1 can correctly parse the downlink data sent by the gNB only after obtaining the foregoing information.

In this embodiment of this application, the gNB pre-configures a plurality of CORESETs for a plurality of sub-bands, and dynamically selects, based on an LBT result, a CORESET actually configured for an available sub-band. This improves resource utilization and a success rate of transmitting the CORESET. Correspondingly, a UE determines, by using a same method as the gNB, a location of a CORESET corresponding to the UE, and parses downlink data based on another CORESET configuration.

It may be understood that, when an LBT channel access mechanism is used, the available sub-band corresponds to a period of channel occupancy time. After the channel occupancy time ends, LBT needs to be performed again. Based on a sensing result, an available sub-band is re-determined and a CORESET configured for the available sub-band is selected. After a period of time, the available sub-band may change. In this case, frequency domain migration of the CORESET is involved. In addition, frequency domain migration of the downlink data is also involved.

In this embodiment of this application, after performing LBT, the gNB dynamically adjusts a frequency domain location of the CORESET, but cannot update downlink scheduling information in the CORESET in time. Therefore, the UE needs to re-parse the downlink resource scheduling information based on an LBT status. NR-U downlink resource scheduling information is at a granularity of a sub-band (for example, with a 20 MHz bandwidth). Therefore, when frequency domain migration is performed on the CORESET due to LBT, a PDSCH of a corresponding sub-band is also migrated to a new sub-band. An advantage is that the gNB does not need to generate new data simultaneously (the gNB also has no time to generate the new data). A sub-band that does not include the CORESET but includes only downlink data remains unchanged, or is delayed for next sending due to limited downlink resources.

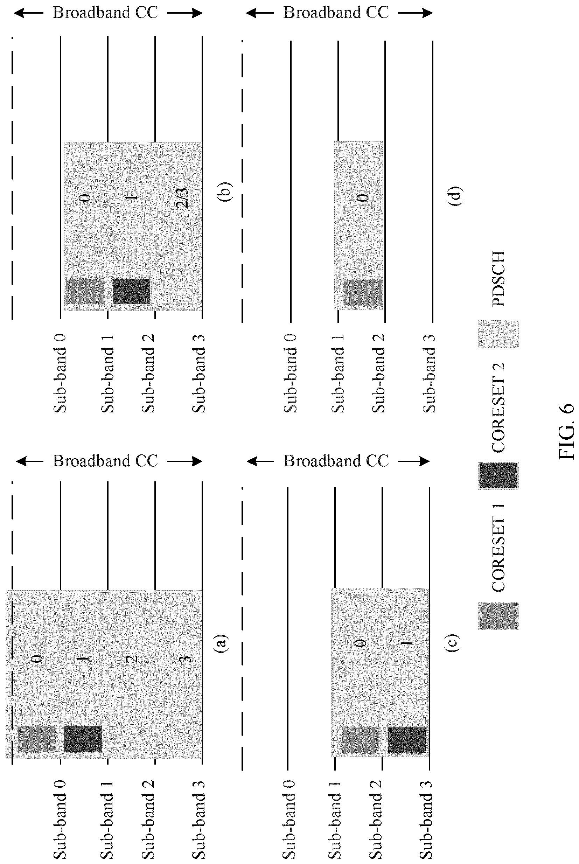

FIG. 6 is a schematic diagram of a dynamic PDSCH adjustment method according to an embodiment of this application. Based on a sensing result of LBT, frequency domain migration is performed on each CORESET. As shown in FIG. 6, a UE 1 corresponds to a CORESET 1, downlink scheduling information of the UE 1 is on the CORESET 1, and a UE 2 corresponds to a CORESET 2. A priority of the CORESET 1 is higher than that of the CORESET 2. In other words, the CORESETs are sent in the following sequence: the CORESET 1 and the CORESET 2.

In (a) of FIG. 6, before the LBT, the CORESET 1 is configured on a sub-band 0, the CORESET 2 is configured on a sub-band 1, and downlink data corresponding to the UE 1 is carried on sub-bands 0, 1, 2, and 3. In this solution, the UE 1 may perform PDSCH rate matching based on the CORESET 2. Specifically, when a PDSCH time-frequency resource corresponding to the UE 1 includes another CORESET (the CORESET 2 in this example), corresponding information on a time-frequency resource corresponding to the another CORESET needs to be punctured. In other words, a PDSCH of the UE 1 is not sent on the time-frequency resource corresponding to the another CORESET.

In (b) of FIG. 6, after the LBT, it is assumed that LBT performed on the sub-bands 1, 2, and 3 succeeds. The CORESET 1 is migrated to the sub-band 1, and the CORESET 2 is migrated to the sub-band 2. In addition, downlink data 0 and downlink data 1 that should be originally transmitted on the sub-band 0 and the sub-band 1 are also correspondingly migrated to the sub-band 1 and the sub-band 2 respectively. In this way, an additional rate matching procedure can be avoided. Data on the sub-band 3 remains unchanged, and data on the sub-band 2 is discarded.

In (c) of FIG. 6, after the LBT, it is assumed that LBT performed on the sub-bands 2 and 3 succeeds. The CORESET 1 is migrated to the sub-band 2, and the CORESET 2 is migrated to the sub-band 3. In addition, the downlink data 0 and the downlink data 1 on the sub-band 0 and the sub-band 1 are also correspondingly migrated to the sub-band 2 and the sub-band 3 respectively. In this way, an additional rate matching procedure can be avoided. Downlink data 2 and 3 that should be originally sent on the sub-bands 2 and 3 are discarded.

In (d) of FIG. 6, after the LBT, it is assumed that only LBT performed on the sub-band 2 succeeds. The CORESET 1 with a higher priority is migrated to the sub-band 2, and the CORESET 2 with a lower priority is discarded. Similarly, only the downlink data 0 on the sub-band 0 is also migrated to the sub-band 2. In this way, an additional rate matching procedure can be avoided. The data on the sub-bands 1, 2, and 3 is discarded.

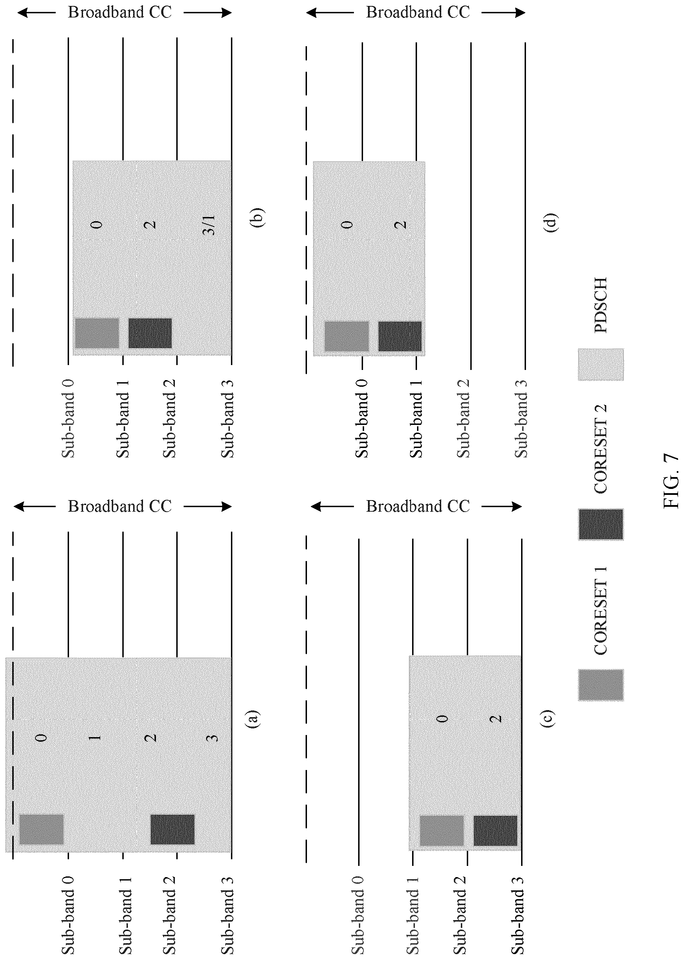

FIG. 7 is a schematic diagram of another dynamic PDSCH adjustment method according to an embodiment of this application. Based on a sensing result of LBT, frequency domain migration is performed on some CORESETs. As shown in FIG. 7, a UE 1 corresponds to a CORESET 1, downlink scheduling information of the UE 1 is on the CORESET 1, and a UE 2 corresponds to a CORESET 2.

In (a) of FIG. 7, before the LBT, the CORESET 1 is configured on a sub-band 0, the CORESET 2 is configured on a sub-band 2, and downlink data corresponding to the UE 1 is on sub-bands 0, 1, 2, and 3. The UE 1 may perform PDSCH rate matching based on the CORESET 2.

In (b) of FIG. 7, after the LBT, it is assumed that LBT performed on the sub-bands 1, 2, and 3 succeeds. The CORESET 1 is migrated to the sub-band 1, and the CORESET 2 and corresponding data remain unchanged. In addition, downlink data on the sub-band 0 is also migrated to the sub-band 1, to avoid an additional rate matching procedure. Data on the sub-band 3 remains unchanged, and data on the sub-band 1 is discarded.

In (c) of FIG. 7, after the LBT, it is assumed that LBT performed on the sub-bands 2 and 3 succeeds. The CORESET 1 is migrated to the sub-band 2, and the CORESET 2 is migrated to the sub-band 3. In addition, downlink data on the sub-bands 0 and 2 is also migrated to the sub-bands 2 and 3, to avoid an additional rate matching procedure. Data on the sub-bands 1 and 3 is discarded.

In (d) of FIG. 7, after the LBT, it is assumed that LBT performed on the sub-bands 0 and 1 succeeds. The CORESET 1 and corresponding data remain unchanged, and the CORESET 2 and the corresponding data are migrated to the sub-band 1. The data on the sub-bands 1 and 3 is discarded.

In this embodiment of this application, when LBT sensing results are different, a gNB may perform frequency domain migration on a CORESET and downlink data. Correspondingly, a UE may determine, by using a same rule, that the gNB may perform frequency domain migration on the CORESET and the downlink data, so that the UE can correctly parse downlink data of the UE based on downlink control information, and perform rate matching.

In the foregoing embodiments, it is assumed that UE capabilities corresponding to a plurality of CORESETs configured by a base station for a plurality of sub-bands are the same. In other words, all these UEs may perform LBT on the plurality of sub-bands. In this way, not only the base station can obtain an LBT result of each of the plurality of sub-bands, and dynamically adjust configurations of the plurality of CORESETs based on the LBT result, but also the UE can obtain the LBT result of each of the plurality of sub-bands, dynamically determine the configurations of the plurality of CORESETs based on the LBT result, and correctly parse a CORESET of the UE based on the LBT result.

The following embodiments in this application describe cases in which UE capabilities corresponding to a plurality of CORESETs configured by a base station for a plurality of sub-bands are not additionally limited, that is, UEs associated with a gNB may have different capabilities. For example, some UEs support a working bandwidth of 40 MHz (that is, two sub-bands), and some UEs may support a maximum working bandwidth of 80 MHz (that is, four sub-bands). When the gNB performs downlink transmission by using an 80 MHz bandwidth, a UE supporting a 40 MHz bandwidth can monitor only an LBT status corresponding to the 40 MHz bandwidth due to a capability limitation. The gNB has to notify the UE of an LBT status of the remaining 40 MHz bandwidth in another manner, or the UE considers by default that LBT performed on the 40 MHz bandwidth fails. However, a UE supporting the 80 MHz bandwidth can obtain an LBT status of the full bandwidth through monitoring by itself.

In a possible implementation, the gNB does not notify the UE of LBT statuses of all sub-bands.

For this implementation, a UE supporting only some sub-bands cannot obtain LBT statuses of all bandwidths used by the base station. To enable the UE and the base station to determine a same CORESET configuration when the UE does not know the LBT statuses of all the bandwidths, when a CORESET priority is configured, a priority of a CORESET corresponding to the UE supporting only some sub-bands is configured to be higher than a priority of a CORESET corresponding to a UE supporting all sub-bands. The following provides description by using an example. Table 1 is a table of a correspondence between a CORESET, a UE, and a sub-band supported by the UE.

**Table 1: Table of a correspondence between a CORESET, a UE, and a sub-band supported by the UE**

| CORESET | UE | Sub-bands supported by the UE |
|---------|------|-------------------------------|
| CORESET 1 | UE 3 | 0, 1, 2, 3 |
| CORESET 2 | UE 2 | 0, 1 |
| CORESET 3 | UE 1 | 0, 1 |

It can be learned from Table 1 that UEs corresponding to the CORESET 3 and the CORESET 2 support some sub-bands, and a UE corresponding to the CORESET 1 supports all sub-bands. Therefore, priorities of the CORESET 3 and the CORESET 2 should be configured to be higher than a priority of the CORESET 1. For example, the priorities of the CORESETs are configured in descending order of the CORESET 3, the CORESET 2, and the CORESET 1.

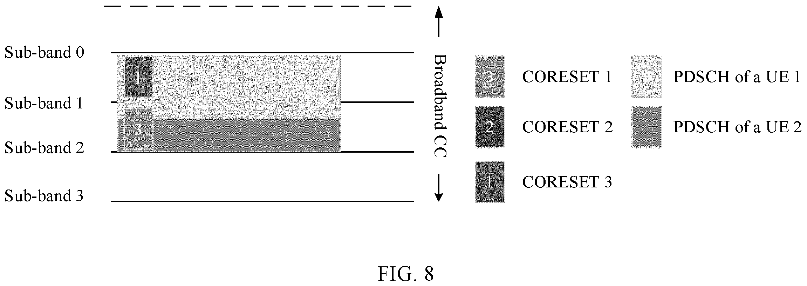

FIG. 8 is a schematic diagram of another CORESET configuration implementation method according to an embodiment of this application. This implementation is based on the correspondence shown in Table 1 and the foregoing CORESET priority configuration. As shown in FIG. 8, the base station separately performs LBT on the sub-bands 0, 1, 2, and 3. If LBT performed on the sub-band 0 and the sub-band 3 fails, and LBT performed on the sub-band 1 and the sub-band 2 succeeds, the gNB can perform downlink transmission only on the sub-band 1 and the sub-band 2. Because the priorities of the CORESETs are in descending order of the CORESET 3, the CORESET 2, and the CORESET 1, that is, {3, 2, 1}, the CORESET 3 is first configured on the sub-band 1 (LBT performed on the sub-band 0 fails). The CORESET 2 can be configured only on the sub-band 0 and the sub-band 1. Because LBT performed on the sub-band 0 fails, and the sub-band 1 is occupied by the CORESET 3, the CORESET 2 and a corresponding PDSCH cannot be sent this time. The CORESET 1 is configured on the sub-band 2 based on LBT result. Table 2 shows a correspondence table between a CORESET priority and an actual CORESET configuration.

**Table 2: Table of a correspondence between a CORESET priority and an actual CORESET configuration**

| CORESET priority | Actual CORESET configuration |
|------------------|------------------------------|
| {3, 2, 1} | A CORESET 3 is configured on a sub-band 1<br>A CORESET 1 is configured on a sub-band 2<br>A CORESET 2 is not configured |

Correspondingly, a UE 1 is used as an example. The UE 1 supports only the sub-band 0 and the sub-band 1. Therefore, the UE 1 can obtain, through the LBT, only that LBT performed on the sub-band 0 fails and LBT performed on the sub-band 1 succeeds. Because the CORESET 3 has a highest priority, the UE 1 determines that the CORESET 3 is configured on the sub-band 1. The configuration result is consistent with that in Table 2. In other words, even if the UE cannot obtain LBT results of all sub-bands, the UE can still determine a sub-band configured for a CORESET corresponding to the UE, to obtain, through parsing, downlink control information sent by using the CORESET.

A UE 2 is used as an example. The UE 2 supports only the sub-band 0 and the sub-band 1. Therefore, the UE 2 can obtain, through the LBT, only that LBT performed on the sub-band 0 fails and LBT performed on the sub-band 1 succeeds. Because the CORESET 3 has the highest priority, the UE 2 determines that the CORESET 3 is configured on the sub-band 1. The CORESET 3 has a second highest priority, and the CORESET 2 can be configured only on the sub-band 0 and the sub-band 1. Because LBT performed on the sub-band 0 fails, and the sub-band 1 is occupied by the CORESET 3, the CORESET 2 and a corresponding PDSCH cannot be sent this time. The configuration result is consistent with that in Table 2. In other words, even if the UE cannot obtain LBT results of all sub-bands, the UE can still determine whether there is a sub-band configured for a CORESET corresponding to the UE.

In another possible implementation, the gNB notifies the UE of the LBT statuses of all the sub-bands (for example, by using a GC-PDCCH or a downlink identification signal, or in another manner).

For this implementation, the priority of the CORESET corresponding to the UE supporting only some sub-bands and the priority of the CORESET corresponding to the UE supporting all the sub-bands may be randomly configured, and are unconditionally limited. Details are not described herein.

In this embodiment of this application, a method for configuring a CORESET priority when UEs have different capabilities is provided. This CORESET priority configuration method can ensure that when the UE cannot obtain the LBT results of all the sub-bands, the UE can still determine a sub-band configured for a CORESET corresponding to the UE.

In this embodiment of this application, when a quantity of sub-bands on which a CORESET may be configured is greater than 1, each sub-band in a corresponding sub-band set may also have a priority. An advantage is that locations of different UEs are different, and channel statuses corresponding to the sub-bands are also different. The gNB configures the CORESET corresponding to the UE on a channel with little attenuation or interference as much as possible, to improve data transmission efficiency. The following provides description by using an example. Table 3 is a table of a correspondence between a CORESET, a UE, a sub-band supported by the UE, and a sub-band priority.

**Table 3: Table of a correspondence between a CORESET, a UE, a sub-band supported by the UE, and a sub-band priority**

| CORESET | UE | Sub-bands supported by the UE | Sub-band priority (in descending order) |
|---|---|---|---|
| CORESET 1 | UE 3 | 0, 1, 2 | {0, 2, 1} |
| CORESET 2 | UE 2 | 0, 1, 2, 3 | {0, 2, 3, 1} |
| CORESET 3 | UE 1 | 0, 1 | {0, 1} |

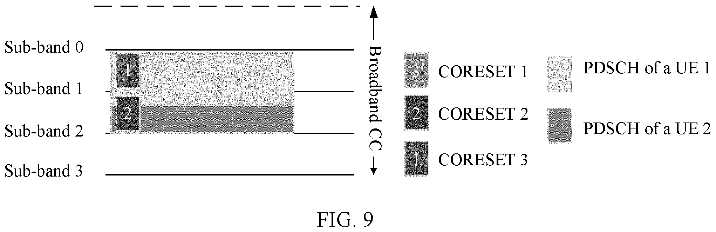

FIG. 9 is a schematic diagram of another CORESET configuration implementation method according to an embodiment of this application. This implementation is based on the correspondence shown in Table 3 and the foregoing CORESET priority configuration. Priorities of the CORESETs are in descending order of the CORESET 3, the CORESET 2, and the CORESET 1, that is, {3, 2, 1}. As shown in FIG. 9, the base station performs LBT on the sub-bands 0, 1, 2, and 3. LBT performed on the sub-band 0 and the sub-band 3 fails, and LBT performed on the sub-band 1 and the sub-band 2 succeeds. In this case, the gNB can perform downlink transmission only on the sub-band 1 and the sub-band 2. Because the priorities of the CORESETs are {3, 2, 1}, the CORESET 3 is first configured on the sub-band 1 (LBT performed on the sub-band 0 fails). The CORESET 2 can be configured on the sub-band 0, the sub-band 2, the sub-band 3, and the sub-band 1. Because LBT performed on the sub-band 0 fails, the CORESET 2 is configured on the sub-band 2 based on a sub-band priority of the CORESET 2. The CORESET 1 is discarded because no sub-band is available. Table 4 is a table of a correspondence between a CORESET priority and an actual CORESET configuration.

**Table 4: Table of a correspondence between a CORESET priority and an actual CORESET configuration**

| CORESET priority | Actual CORESET configuration |
|---|---|
| {3, 2, 1} | A CORESET 3 is configured on a sub-band 1<br>A CORESET 2 is configured on a sub-band 2<br>A CORESET 1 is not configured |

Similarly, based on the correspondence shown in Table 3, if a CORESET priority is changed, a finally determined CORESET configuration may be different.

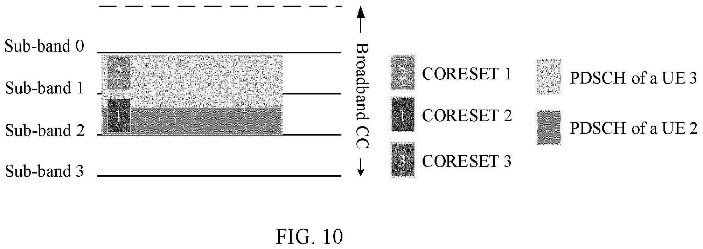

FIG. 10 is a schematic diagram of another CORESET configuration implementation method according to an embodiment of this application. This implementation is based on the correspondence shown in Table 3, and the priorities of the CORESETs are {2, 1, 3}. As shown in FIG. 10, the base station performs LBT on the sub-bands 0, 1, 2, and 3. LBT performed on the sub-band 0 and the sub-band 3 fails, and LBT performed on the sub-band 1 and the sub-band 2 succeeds. In this case, the gNB can perform downlink transmission only on the sub-band 1 and the sub-band 2. Because the priorities of the CORESETs are {2, 1, 3}, the CORESET 2 is first configured on the sub-band 2 (LBT performed on the sub-band 0 fails, so that the CORESET 2 is configured on the sub-band 2 based on a sub-band priority corresponding to the CORESET 2). The CORESET 1 can be configured only on the sub-band 0, the sub-band 2, and the sub-band 1. Because LBT performed on the sub-band 0 fails, and the sub-band 2 is occupied by the CORESET 2, the CORESET 1 is configured on the sub-band 1 based on a sub-band priority of the CORESET 1. The CORESET 3 is discarded because no sub-band is available. Table 5 is a table of a correspondence between a CORESET priority and an actual CORESET configuration.

**Table 5: Table of a correspondence between a CORESET priority and an actual CORESET configuration**

| CORESET priority | Actual CORESET configuration |
|---|---|
| {2, 1, 3} | A CORESET 2 is configured on a sub-band 2<br>A CORESET 1 is configured on a sub-band 1<br>A CORESET 3 is not configured |

In this embodiment of this application, when a quantity of sub-bands in a sub-band set corresponding to a CORESET is greater than 1, the gNB performs dynamic CORESET configuration based on an LBT result and a sub-band priority. This helps the gNB configure a CORESET corresponding to a UE on a channel with little attenuation or interference as much as possible, thereby helping improve data transmission efficiency.

In the foregoing embodiment, when the CORESET is used to carry downlink control information for scheduling downlink data, how the CORESET and corresponding data are sent after frequency domain migration is performed based on an LBT result is discussed. The NR further includes a CORESET used to send a system message and a corresponding search space. For example, a type 0-PDCCH and a common search space (common search space, CSS) are used to broadcast system messages of a local cell and a surrounding cell. For example, a system information block 1 (system information block 1, SIB1) is used for normal working and cell handover of the UE. A type 1-PDCCH and the CSS are used to carry a message (message, Msg) for performing random access by the UE, for example, a Msg 2 and a Msg 4.

For a UE that performs initial access and has not been associated with the base station, an initial bandwidth of the UE is fixed at 20 MHz. Therefore, a CORESET corresponding to the CSS can only be fixed at a sub-band. When gNB fails to perform LBT, the system message is delayed until next transmission. Because the CORESET is crucial to normal working of the UE, it is considered that a priority of the CORESET corresponding to the CSS is fixed to a highest priority or the CORESET has a higher probability of being a CORESET that is preferentially sent.

This embodiment of this application provides a method for configuring and sending a CORESET corresponding to a CSS, and a corresponding priority setting, to ensure that when a plurality of CORESETs are configured for a plurality of sub-bands, a correspondence between the CORESET that corresponds to the CSS and that is included in the plurality of CORESETs and one of the plurality of sub-bands is fixed, and the correspondence is not affected by an LBT result. In addition, another CORESET cannot be configured on the sub-band, to preferentially ensure that a message carried on the CORESET corresponding to the CSS can be successfully sent.

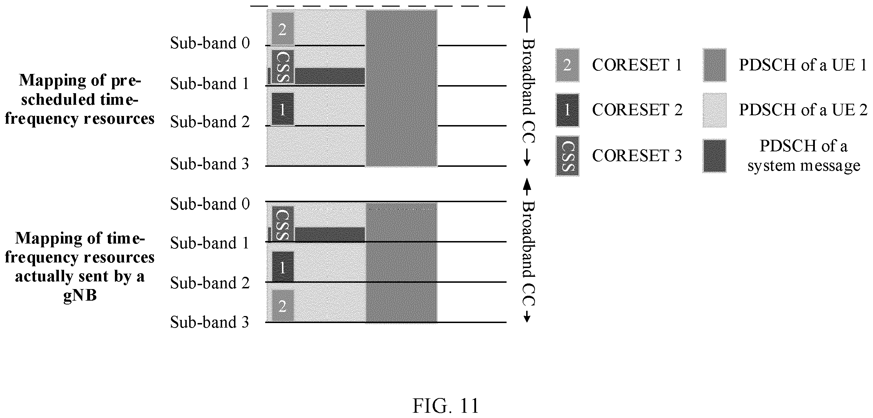

For example, FIG. 11 is a schematic diagram of another CORESET configuration implementation method according to an embodiment of this application. Before performing LBT, the gNB pre-schedules a time-frequency resource for downlink transmission. Two CORESETs (a CORESET 1 and a CORESET 2 in FIG. 11) carrying downlink scheduling information and one CORESET (a CORESET 3 in FIG. 11) carrying common control information are scheduled in a slot (slot) shown in the figure. The CORESET 1 schedules a PDSCH of the UE 1, and the CORESET 2 schedules a PDSCH of the UE 2. In this embodiment, it is assumed that all UEs have a same capability and support reception on all available sub-bands. In this case, priorities of the CORESETs are {2, 1}. To be specific, the priority of the CORESET 1 is 2, the priority of the CORESET 2 is 1, and the priority of the CORESET 2 is higher. After performing LBT, the gNB finds that only sub-bands 1, 2, and 3 are available in this time. In this case, the CORESET (the CORESET 3) corresponding to the common control information remains to be sent on the sub-band 1, and a PDSCH of the common control information included in the sub-band and downlink data scheduled by another CORESET remain unchanged, continue to be sent on the sub-band. Because it is known that the CORESET 3 is sent on the sub-band 1, and the CORESET 2 has a highest priority, the CORESET 2 is still sent on the sub-band 2. Because it is known that the CORESET 3 is sent on the sub-band 1, and the CORESET 2 is sent on the sub-band 2, the CORESET 1 is sent on the sub-band 3.

When parsing a PDSCH time-frequency resource indicated in a PDCCH, the UE 2 may determine, based on configuration information and LBT information of the CORESETs, an actual sending sub-band of each CORESET. Because PDSCHs of the CORESETs on the sub-band 1 and the sub-band 2 remain unchanged, the PDSCHs are still sent on the sub-bands. A PDSCH of the sub-band 0 is migrated to the sub-band 3 for sending, and a PDSCH on the sub-band 3 cannot be sent due to insufficient sending sub-bands. In addition, time-frequency resources of the CORESET 3 and the CORESET 2 need to be punctured from data on both the sub-band 1 and the sub-band 3 for rate matching.

When parsing the PDSCH time-frequency resource indicated in the PDCCH, the UE 1 may determine, based on the configuration information and the LBT information of the CORESETs, the actual sending sub-band of each CORESET. The UE 1 may perform PDSCH parsing by using a method similar to the foregoing method. Because a PDSCH of the UE 1 does not overlap the CORESET, rate matching does not need to be performed.

When LBT performed on the sub-band on which the CORESET of the common control information is configured fails, the gNB does not transmit the CORESET and the PDSCH in this transmission. In other words, the CORESET of the common control information and the corresponding PDSCH are transmitted only on the configured sub-band or are not transmitted due to an LBT failure, and an LBT result cannot be used as a basis for sub-band migration.

In the foregoing embodiment, it is assumed that the UEs have the same capability and can perform receiving on all the sub-bands. When the UEs have different capabilities and some/all of the UEs can perform receiving only on some sub-bands, sending of the CORESET and the PDSCH of the common control information is the same as that in the foregoing embodiment. A method for configuring and transmitting a CORESET carrying data control information for scheduling the UE and a corresponding PDSCH are similar to that in the embodiment corresponding to FIG. 10, and details are not described herein again.

Another embodiment of this application further provides a control resource set configuration and parsing method.

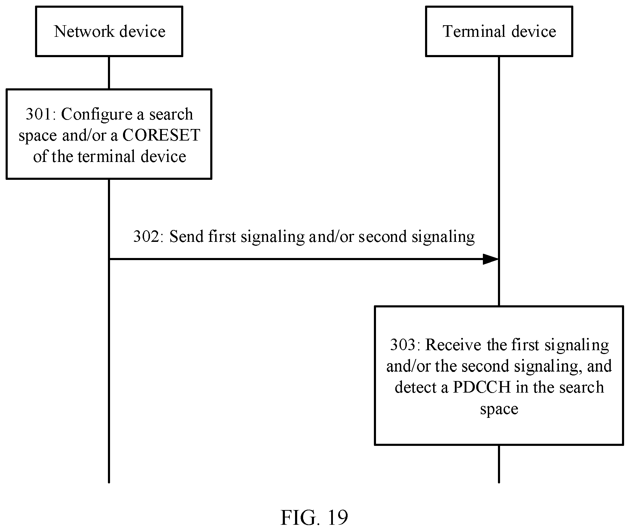

Referring to FIG. 19, the method may include the following operation procedure.

301: A network device configures a search space and a CORESET of a terminal device, where the search space is used by the terminal device to monitor a PDCCH. In time domain, the network device configures a monitoring periodicity (periodicity) and a monitoring occasion (monitoring occasion) for the terminal device, and in frequency domain, the network device configures a plurality of monitoring locations (monitoring location) for the terminal device. There are a plurality of monitoring locations in frequency domain on one monitoring occasion, and the search space is used by the terminal device to monitor the PDCCH. A bandwidth of the monitoring location in frequency domain may be less than or equal to a bandwidth of one sub-band in frequency domain. Optionally, the bandwidth of the monitoring location in frequency domain is equal to a bandwidth of the Coreset.

302: The network device sends first signaling and/or second signaling to the terminal device, where the first signaling is used to indicate a search space configuration to the terminal device, and the second signaling is used to indicate a CORESET configuration to the terminal device.

303: The terminal device receives the first signaling and/or the second signaling from the network device, and monitors the PDCCH in the search space based on the first signaling and/or the second signaling.

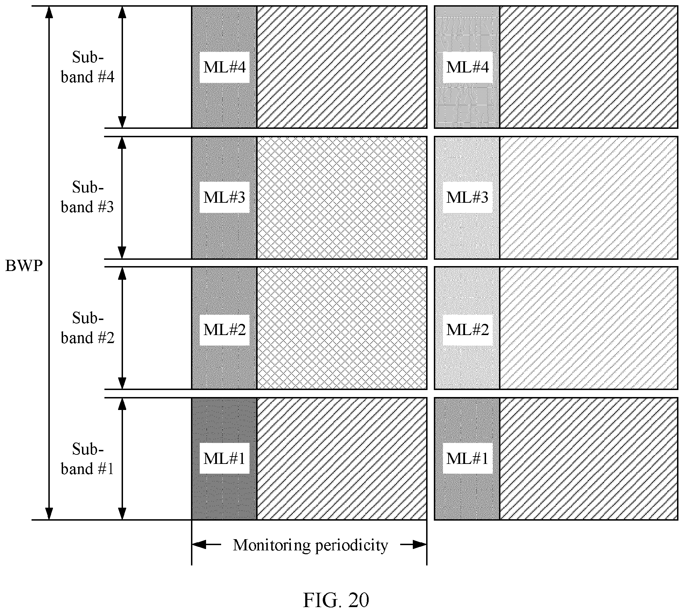

The following describes step 301 as an example. Referring to FIG. 20, the network device configures a BWP for the terminal device, where the BWP includes four sub-bands: #1 to #4. In addition, four monitoring locations are configured, and each sub-band includes one monitoring location. For ease of description, the four monitoring locations are represented by ML#1 to ML#4. In a slot 1 (slot 1), the terminal device performs monitoring at the ML#1 to the ML#4, and monitors a GC-PDCCH at the ML#1, so that the terminal device obtains an available sub-band indication. The available sub-band indication indicates that the sub-band #1 and the sub-band #4 are available sub-bands. In a next slot, namely, a slot 2 (slot 2), the terminal device performs monitoring at the ML#1 of the sub-band 1, and performs monitoring at the ML#4 of the sub-band 2.

It can be learned that when receiving available sub-band indication information sent by the network device, the terminal device monitors the PDCCH in a search space on the available sub-band, and when the terminal device does not receive the available sub-band indication information sent by the network device, the terminal device monitors the PDCCH at all the configured monitoring locations. Optionally, the available sub-band indication information may be represented as an LBT bandwidth indicator.

The following further describes the monitoring location. The monitoring location includes one CORESET, and the terminal device perform monitoring in the CORESET. Specifically, the terminal device monitors the PDCCH at monitored PDCCH candidates (monitored PDCCH candidates) in the CORESET. In the following, the "monitored PDCCH candidates" are referred to as "PDCCH candidates (PDCCH candidates)" for ease of description.

When the terminal device finds that the available sub-band changes (for example, the terminal device receives the GC-PDCCH, and obtains the available sub-band indication information that indicates that available sub-band information is updated), the terminal device may adjust the monitoring location, and may reallocate a quantity of PDCCH candidates at the monitoring location. For example, FIG. 20 is used as an example. The network device configures four sub-bands, and configures one search space for the terminal device. The search space includes four monitoring locations in frequency domain. If the terminal device can monitor X = 44 PDCCH candidates in one slot, the terminal device monitors the PDCCH at the monitoring locations ML#1 to ML#4 before the terminal monitors the GC-PDCCH that carries the available sub-band indication information. At one monitoring location, the terminal device monitors 11 PDCCH candidates. When the terminal device monitors the GC-PDCCH and obtains that only the sub-band #1 and the sub-band #4 are available, the terminal device may reallocate the 44 PDCCH candidates, and may allocate 22 PDCCH candidates to each monitoring location. In this case, the terminal device performs monitoring at the sub-band #1 and the sub-band #4, and 22 PDCCH candidates may be monitored at each monitoring location.

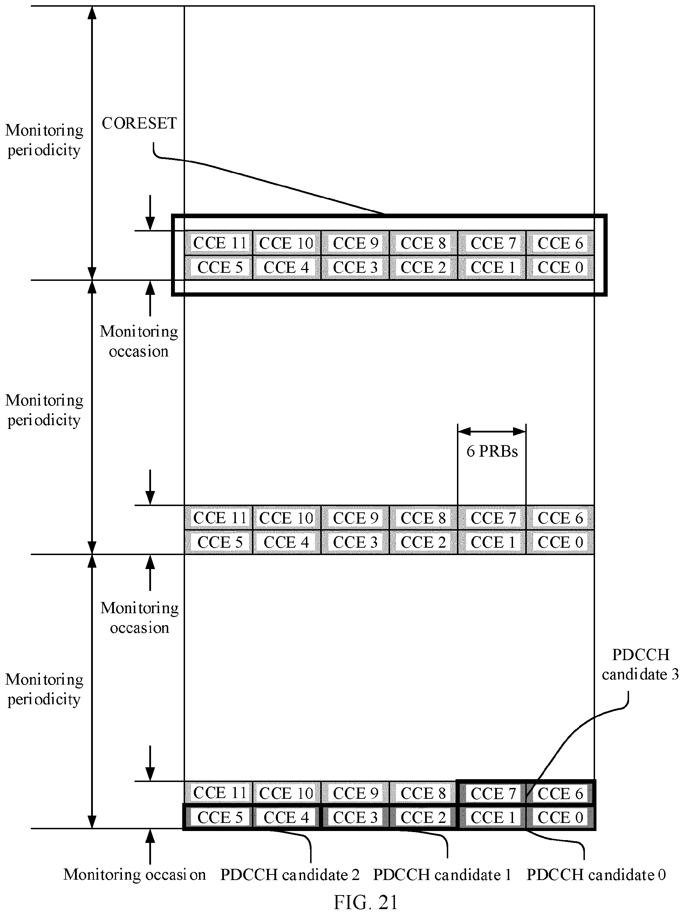

Referring to FIG. 21, the PDCCH candidate is further described. One CORESET occupies six CCEs in frequency domain and two symbols in time domain. One CCE occupies one symbol and six RBs. In other words, one CORESET occupies 36 PRBs in frequency domain. For example, an aggregation level (aggregation level) of the PDCCH is 2, and each monitored PDCCH candidate (monitored PDCCH candidate) occupies two CCEs. In the search space, several PDCCH candidates are configured for each monitoring occasion. For different PDCCH formats (format), quantities of monitored PDCCH candidates included in monitoring occasions may be the same or different. In FIG. 20, one monitoring occasion includes four monitored PDCCH candidates, which are represented by PDCCH Candidates (PDCCH candidate) 1 to 4. The PDCCH Candidate 0 includes a CCE 1 and a CCE 2, the PDCCH Candidate 1 includes the CCE 2 and a CCE 3, the PDCCH Candidate 2 includes a CCE 4 and a CCE 5, and the PDCCH Candidate 3 includes a CCE 6 and a CCE 7. In different implementations, the monitoring periodicity may be in a unit of a symbol or in a unit of a slot.

For example, the terminal device monitors X PDCCH candidates in one time unit. The X PDCCH candidates are allocated to one or more to-be-monitored monitoring locations. A total quantity of PDCCH candidates monitored at the one or more to-be-monitored monitoring locations does not exceed X. A quantity of PDCCH candidates allocated to each to-be-monitored monitoring location may be the same or may be different. The time unit may be a slot (slot), a slot (mini slot), a frame (frame), or a subframe (subframe).

In some embodiments, the terminal device monitors the CCE at the monitoring location. For example, the terminal device monitors Y CCEs that do not overlap in one time unit, and the Y to-be-monitored CCEs are allocated to the one or more to-be-monitored monitoring locations. A total quantity of PDCCH candidates monitored on one or more to-be-monitored CCEs does not exceed X. A quantity of CCEs allocated to each to-be-monitored monitoring location may be the same or may be different. The time unit may be a slot (slot), a mini slot (mini slot), a frame (frame), or a subframe (subframe).

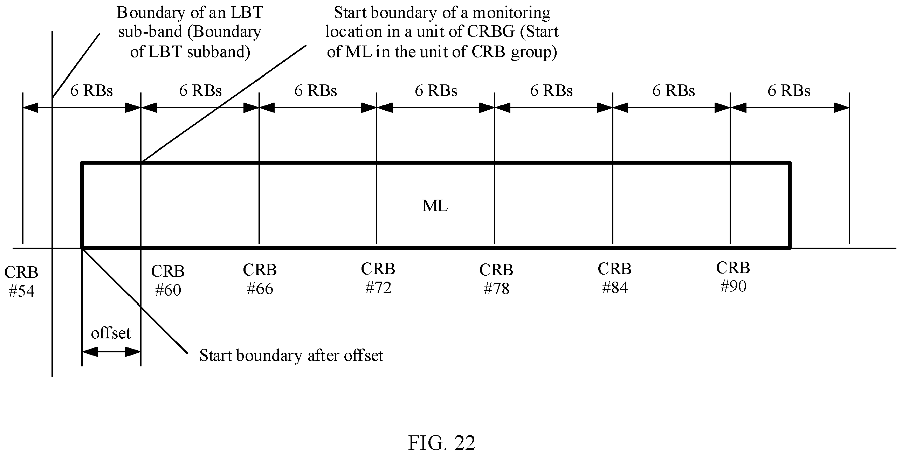

The network device sends the second signaling, and the second signaling is used to configure a control resource set for the terminal device. The second signaling includes a first field, and the first field is used to indicate a frequency domain location of a first monitoring location in a plurality of monitoring locations, for example, a start PRB sequence number of the frequency domain location and a quantity of PRBs occupied by the frequency domain location. Optionally, the first field may be represented as a "frequency domain resource" (frequencyDomainResources). In different implementations, the first monitoring location may be a monitoring location with a smallest start PRB sequence number in the plurality of monitoring locations, or the first monitoring location may be a monitoring location with a largest start PRB sequence number in the plurality of monitoring locations, or the first monitoring location may be a default monitoring location on a sub-band. When the sub-band is an available sub-band indicated by the network device, the terminal may perform monitoring only at the default monitoring location of the available sub-band. In other words, after the terminal device obtains an available sub-band indication, and the monitoring location is on the available sub-band, and the terminal device may monitor the PDCCH only at the monitoring location. If the monitoring location is not on the available sub-band, the terminal device selects a next nearest monitoring location on the available sub-band as the default monitoring location. The first field may be a bitmap, where one bit corresponds to one RB or one RBG (including six RBs), and a value of the bit is used to indicate whether the RB or the RBG corresponding to the bit can belong to the first monitoring location. The RBG may include a PRB, and in this case, the RBG is a physical resource block group (physical resource block group, PRBG). For example, six PRBs form the PRBG. Alternatively, the RBG may include a CRB. A group including CRBs may be a common resource block group (Common RB group, CRBG). The PRBG is a group including PRBs numbered from a PRB 0 in the BWP. For example, six CRBs form the CRBG. There are N PRBGs or N CRBGs in one BWP. The CRBG is a group including CRBs numbered from a reference point A (point A) or a CRB 0 in a carrier in the BWP. Referring to FIG. 22, a CRB#54 to a CRB#59 are one CRBG, and a CRB#60 to a CRB#65 are one CRBG. Each bit corresponds to one CRB group in the BWP. Alternatively, in a resource indicator value (resource indicator value, RIV) joint coding manner, the first field may indicate a start PRB at the first monitoring location and a quantity of RBs occupied by the first monitoring location, or an index of the start PRB and the quantity of RBs occupied by the first monitoring location, or a start resource block group CRBG or PRBG at the first monitoring location and a quantity of CRBGs or PRBGs occupied by the first monitoring location, or an index of the start CRBG or PRBG at the first monitoring location and the quantity of CRBGs or PRBGs occupied by the first monitoring location.

In some implementations, the second signaling may further carry an offset indication. The offset indication is used to indicate a quantity of offset RBs between a start boundary of an RB with a smallest RB index at the first monitoring location and a boundary of a nearest CRBG or PRBG whose index is greater than or less than the RB index. Therefore, a start location of the first monitoring location may not be limited to a start boundary of the CRBG or the PRBG, but may start from any PRB or any CRB in the CRBG or the PRBG. Referring to FIG. 21, a start boundary of the first monitoring location may not be aligned with the start boundary of the CRBG or the PRBG, but is aligned with a start boundary of any PRB or any CRB in the CRBG or the PRBG. The CRBG is used as an example. The offset may indicate a quantity of offset RBs between a start boundary of an RB with a smallest CRB index at the first monitoring location and the CRB #54 or the CRB #60.

In still another implementation, the first signaling further includes a second field. The second field is used to indicate an offset of one monitoring location or an offset of a group of monitoring locations relative to the first monitoring location. The terminal device may obtain a start location of each monitoring location based on the offset, for example, a start PRB sequence number of each monitoring location. Optionally, in another embodiment, the second field may be carried in the second signaling instead of the first signaling.

For example, the network device configures one offset. Specifically, an offset between any two adjacent monitoring locations is the same. In other words, the offset between any two adjacent monitoring locations is fixed. The network device may determine a plurality of monitoring locations by configuring one offset. The $i^{th}$ monitoring location is used to represent a monitoring location other than the first monitoring location, where i is an integer greater than 1 and less than a total quantity of monitoring locations, and a start PRB sequence number $N^{start,i}$ of the $i^{th}$ monitoring location meets the following rule:

$$N^{start,i} = N^{start,1} + (i-1) \times O$$

$N^{start,i}$ represents a start boundary of the $i^{th}$ monitoring location, and the start boundary may be a start PRB index, a start CRB index, a start PRBG index, or a start CRBG index. *O* is an offset between two adjacent monitoring locations, and the offset may be in a unit of an RB or an RBG.

For example, the network device configures a plurality of offsets. Specifically, an offset between any two adjacent monitoring locations may be the same or different, or the offset between any two adjacent monitoring locations may be fixed or may not be fixed.

In one case, the plurality of offsets are offsets of monitoring locations other than the first monitoring location relative to the first location. In other words, the network device separately configures the offsets of the monitoring locations other than the first monitoring location relative to the first monitoring location. The plurality of offsets may form an offset sequence $(O_1, ..., O_{k-1})$, where K is a quantity of the monitoring locations other than the first monitoring location. A start PRB sequence number of the $i^{th}$ monitoring location meets the following rule:

$$N^{start,i} = N^{start,1} + O_{i-1}$$

$N^{start,i}$ represents a start boundary of the $i^{th}$ monitoring location, and the start boundary may be a start PRB index, a start CRB index, a start PRBG index, or a start RBG index. The offset may be in a unit of an RB or an RBG.

In another case, the plurality of offsets are offsets of each monitoring location relative to a previous adjacent monitoring location. The plurality of offsets may form an offset sequence $(O_1..., O_{k-1})$, and the offset may be in a unit of an RB or an RBG. K is a quantity of monitoring locations other than the first monitoring location. A start PRB sequence number of the $i^{th}$ monitoring location meets the following rule:

$$N^{start,i} = N^{start,1} + \sum_{k=1}^{i-1} O_k$$

$N^{start,i}$ represents a start boundary of the $i^{th}$ monitoring location, and the start boundary may be a start PRB index, a start CRB index, a start PRBG index, or a start CRBG index.

In still another case, the network device may separately configure start boundaries for monitoring locations other than the first monitoring location, to form a start boundary location sequence $(N^{start,2}, ..., N^{start,K})$. The start boundary may be a start PRB index, a start CRB index, a start PRBG index, or a start CRBG index. K is a quantity of the monitoring locations other than the first monitoring location.

In still another embodiment, the first signaling may further include a third field, which may be represented as "nrofCandidates". The third field is used to indicate quantities of PDCCH candidates, corresponding to different aggregation levels, at each monitoring location in one monitoring occasion. Alternatively, the third field is used to indicate a total quantity of PDCCH candidates, corresponding to different aggregation levels, at all monitoring locations at one monitoring occasion. The total quantity may be allocated to each monitoring location, and a quantity of PDCCH candidates at each monitoring location may be the same or different.

The first signaling may further include a fourth field. The fourth field is used to indicate a quantity of PDCCH candidates, corresponding to one or more DCI formats, at each monitoring location in one monitoring occasion. Alternatively, the fourth field is used to indicate that a total quantity of PDCCH candidates, corresponding to one or more DCI formats, at all monitoring locations in one monitoring occasion. The total quantity is allocated to each monitoring location, and a quantity of PDCCH candidates at each monitoring location may be the same or different. For example, DCI of the monitoring occasion is configured as a DCI format 2-0 or a slot format indicator (slot format indicator, SFI).

Related features of the embodiments of this application may be cited from the foregoing embodiments or the following embodiments. Therefore, repeated parts are not described in detail. In addition, a network device or a terminal (or a related module, a chip, a system, a computer program, or a storage medium) in the following apparatus embodiments or system embodiments may also be configured to perform the method provided in the embodiments of this application.

The foregoing describes the control resource configuration and parsing method provided in the embodiments of this application. The following describes the network device and the terminal device provided in the embodiments of this application.

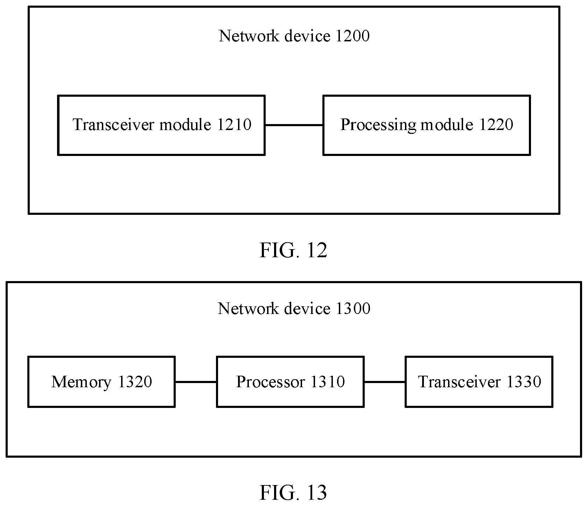

FIG. 12 is a schematic block diagram of a network device 1200 according to an embodiment of this application. The network device pre-configures a plurality of control resource sets on a plurality of sub-bands, and the plurality of control resource sets have different priorities. The network device 1200 includes:

> a transceiver module 1210, configured to separately perform channel sensing on the plurality of sub-bands, to determine one or more available sub-bands in the plurality of sub-bands; and
> a processing module 1220, configured to determine one or more to-be-scheduled control resource sets from the plurality of control resource sets based on a priority of each of the plurality of control resource sets, and send, through the transceiver module 1210 and on the one or more available sub-bands, the one or more to-be-scheduled control resource sets within corresponding channel occupancy time, where the control resource set carries downlink control information for a terminal device.

In this embodiment of this application, the network device not only pre-configures the plurality of control resource sets that are allowed to be simultaneously sent on the plurality of sub-bands, but also pre-configures that the plurality of control resource sets have different priorities, so that the transceiver module 1210 separately performs channel sensing on the plurality of sub-bands. If a quantity of available sub-bands in the plurality of sub-bands is less than a quantity of the plurality of control resource sets, the processing module 1220 selects, for the available sub-bands, some control resource sets from the plurality of control resource sets based on the priority of each of the plurality of control resource sets, and carries, within the channel occupancy time corresponding to the available sub-bands and by using the some control resource sets, the downlink control information to be sent to the terminal device, to improve a success rate of sending the CORESET without increasing resources required by the CORESET.

In addition, the network device may further send the priority of each control resource set and a correspondence between the plurality of sub-bands and the plurality of control resource sets to the terminal device associated with the network device, so that the terminal device can determine, by using a same method as the network device, a sub-band configured for a control resource set corresponding to the terminal device, and parses the downlink control information based on the configuration.

Optionally, in an embodiment, that the network device pre-configures a plurality of control resource sets on a plurality of sub-bands includes:

One or more control resource sets are pre-configured on one of the plurality of sub-bands; and/or one control resource set is pre-configured on one or more sub-bands.

Optionally, in an embodiment, the priority of each of the plurality of control resource sets is updated at a predetermined time interval. Alternatively, priorities of control resource sets that are in the plurality of control resource sets and that have a same terminal device capability are updated at a predetermined time interval. The terminal device capability represents a quantity of sub-bands supported by the terminal device.

Optionally, in an embodiment, quantities of sub-bands supported by terminal devices corresponding to the plurality of control resource sets are different. That the plurality of control resource sets have different priorities includes:

The priorities of the plurality of control resource sets are pre-configured based on the quantities of sub-bands supported by the terminal devices corresponding to the control resource sets, and for one or more terminal devices that support a smaller quantity of sub-bands, a priority of a control resource set corresponding to the one or more terminal devices is higher.

Optionally, in an embodiment, quantities of sub-bands supported by terminal devices corresponding to the plurality of control resource sets are different. The processing module 1220 is further configured to: before determining the one or more to-be-scheduled control resource sets from the plurality of control resource sets, send sensing results of the plurality of sub-bands to the terminal devices through the transceiver module 1210.

Optionally, in an embodiment, a plurality of sub-bands that can be configured for the control resource set have different priorities.

The processing module 1220 is further configured to determine, based on a priority of each sub-band that is in the available sub-bands and that can be configured for the control resource set, a sub-band used to send the control resource set.

Optionally, in an embodiment, the processing module 1220 is further configured to: determine that a pre-configured first sub-band used to send the control resource set is different from a second sub-band that is configured based on a sensing result and used to send the control resource set, and send, on the second sub-band through the transceiver module 1210, downlink data pre-configured on the first sub-band.

Optionally, in an embodiment, the downlink control information includes downlink scheduling information or a system message.

The processing module 1220 is specifically configured to: when the plurality of control resource sets include a control resource set used to carry the system message, select the control resource set used to carry the system message from the plurality of control resource sets; select, from the available sub-bands, a sub-band corresponding to the control resource set used to carry the system message; and select, from a plurality of remaining control resource sets after selection and based on a priority of each of the plurality of remaining control resource sets, one or more control resource sets for a remaining available sub-band after selection.

It should be understood that the processing module 1220 in this embodiment of this application may be implemented by a processor or a processor-related circuit component, and the transceiver module 1210 may be implemented by a transceiver or a transceiver-related circuit component.

As shown in FIG. 13, this embodiment of this application further provides a network device 1300. The network device 1300 includes a processor 1310, a memory 1320, and a transceiver 1330. The memory 1320 stores an instruction or a program, and the processor 1310 is configured to execute the instruction or the program stored in the memory 1320. When the instruction or the program stored in the memory 1320 is executed, the processor 1310 is configured to perform an operation performed by the processing module 1220 in the foregoing embodiment, and the transceiver 1330 is configured to perform an operation performed by the transceiver module 1210 in the foregoing embodiment.

It should be understood that the network device 1200 or the network device 1300 according to this embodiment of this application may correspond to the network device in the methods corresponding to FIG. 2 and FIG. 19 in the embodiments of this application, and operations and/or functions of the modules in the network device 1200 or the network device 1300 are separately used to implement corresponding procedures of the methods in FIG. 2 and FIG. 19. For brevity, details are not described herein again.

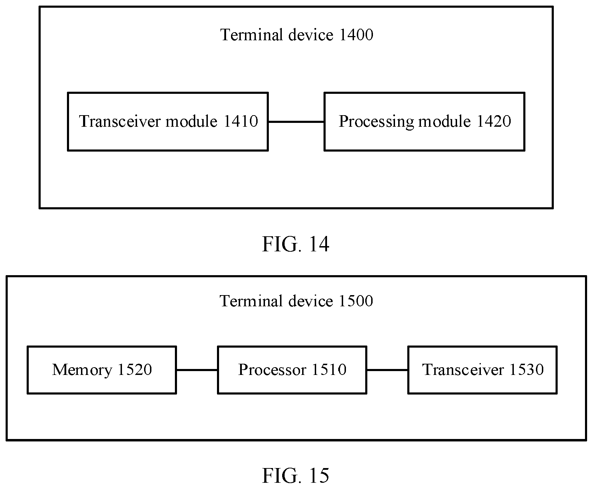

FIG. 14 is a schematic block diagram of a terminal device 1400 according to an embodiment of this application. The terminal device pre-obtains configuration information of a network device. The configuration information is used to indicate that the network device pre-configures a plurality of control resource sets on a plurality of sub-bands, and the plurality of control resource sets have different priorities. The terminal device 1400 includes:

a transceiver module 1410, configured to obtain at least a sensing result of a sub-band supported by the terminal device in the plurality of sub-bands, where the sensing result is used to determine one or more available sub-bands in the plurality of sub-bands; and

a processing module 1420, configured to: determine, based on at least the sensing result and a priority of each of the plurality of control resource sets, an actually configured sub-band of a control resource set corresponding to the terminal device, receive, from the network device through the transceiver module 1410 within channel occupancy time corresponding to the actually configured sub-band, downlink control information carried on the control resource set, and parse the downlink control information.

In this embodiment of this application, the terminal device pre-obtains the priority of each control resource set and a correspondence between the plurality of sub-bands and the plurality of control resource sets from the network device, so that the processing module 1420 can determine, by using a same method as the network device and based on the sensing result obtained by the transceiver module 1410, a sub-band configured for the control resource set corresponding to the terminal device, and parses the downlink control information based on the configuration.

Optionally, in an embodiment, quantities of sub-bands supported by terminal devices corresponding to the plurality of control resource sets are different. The transceiver module 1410 is specifically configured to receive sensing results of the plurality of sub-bands from the network device.

Optionally, in an embodiment, a plurality of sub-bands that can be configured for the control resource set have different priorities.

The processing module 1420 is specifically configured to: based on the priority of each of the plurality of control resource sets and a priority of each sub-band that is in the available sub-bands and that can be configured for the control resource set, determine one or more to-be-scheduled control resource sets that are for the available sub-bands and that are determined by the network device from the plurality of control resource sets, and determine a sub-band configured for each of the one or more control resource sets.

Optionally, in an embodiment, the processing module 1420 is further configured to: when determining that a pre-configured first sub-band used to send the control resource set corresponding to the terminal device is different from a second sub-band that is configured based on the sensing result and used to send the control resource set, receive, on the second sub-band through the transceiver module 1410, downlink data pre-configured on the first sub-band.

Optionally, in an embodiment, the downlink control information includes downlink scheduling information or a system message.

The processing module 1420 is specifically configured to: when the plurality of control resource sets include a control resource set used to carry the system message, select, by the terminal device, the control resource set used to carry the system message from the plurality of control resource sets; select, from the available sub-bands, a sub-band corresponding to the control resource set used to carry the system message; and select, from a plurality of remaining control resource sets after selection and based on a priority of each of the plurality of remaining control resource sets, one or more control resource sets for a remaining available sub-band after selection.

It should be understood that the processing module 1420 in this embodiment of this application may be implemented by a processor or a processor-related circuit component, and the transceiver module 1410 may be implemented by a transceiver or a transceiver-related circuit component.

As shown in FIG. 15, this embodiment of this application further provides a terminal device 1500. The terminal device 1500 includes a processor 1510, a memory 1520, and a transceiver 1530. The memory 1520 stores an instruction or a program, and the processor 1510 is configured to execute the instruction or the program stored in the memory 1520. When the instruction or the program stored in the memory 1520 is executed, the processor 1510 is configured to perform an operation performed by the processing module 1420 in the foregoing embodiment, and the transceiver 1530 is configured to perform an operation performed by the transceiver module 1410 in the foregoing embodiment.

It should be understood that the terminal device 1400 or the terminal device 1500 according to this embodiment of this application may correspond to the terminal device in the methods corresponding to FIG. 2 and

FIG. 19 in the embodiments of this application, and operations and/or functions of the modules in the terminal device 1400 or the terminal device 1500 are separately used to implement corresponding procedures of the methods in FIG. 2 and FIG. 19. For brevity, details are not described herein again.

An embodiment of this application further provides a computer-readable storage medium. The computer-readable storage medium stores a computer program. When the program is executed by a processor, a procedure related to the terminal device in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a communications apparatus, and the communications apparatus may be a terminal device or a circuit. The communications apparatus may be configured to perform an action performed by the terminal device in the foregoing method embodiments.

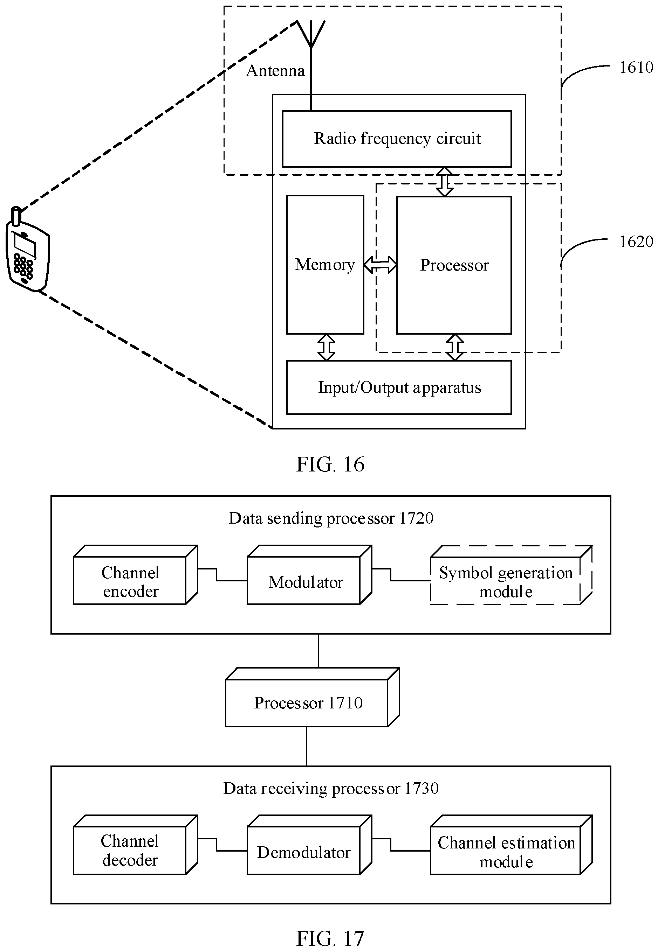

When the communications apparatus is a terminal device, FIG. 16 is a simplified schematic structural diagram of the terminal device. For ease of understanding and convenience of figure illustration, an example in which the terminal device is a mobile phone is used in FIG. 16. As shown in FIG. 16, the terminal device includes a processor, a memory, a radio frequency circuit, an antenna, and an input/output apparatus. The processor is mainly configured to: process a communication protocol and communication data, control the terminal device, execute a software program, process data of a software program, and the like. The memory is mainly configured to store the software program and the data. The radio frequency circuit is mainly configured to perform conversion between a baseband signal and a radio frequency signal, and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and outputs a baseband signal to the radio frequency circuit. After performing radio frequency processing on the baseband signal, the radio frequency circuit sends a radio frequency signal in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 16. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 16, the terminal device includes a transceiver unit 2010 and a processing unit 2020. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 1610 is configured to perform a sending operation and a receiving operation on a terminal device side in the foregoing method embodiments, and the processing unit 1620 is configured to perform another operation excluding the receiving operation and the sending operation of the terminal device in the foregoing method embodiments.

For example, in an implementation, the transceiver unit 1610 is configured to perform the receiving operation on the terminal device side in step 204 in FIG. 2 and FIG. 19, and/or the transceiver unit 1610 is further configured to perform another receiving and sending step on the terminal device side in the embodiments of this application. The processing unit 1620 is configured to perform step 206 in FIG. 2 and FIG. 19, and/or the processing unit 1620 is further configured to perform another processing step on the terminal device side in the embodiments of this application.

When the communications apparatus is a chip, the chip includes a transceiver unit and a processing unit. The transceiver unit may be an input/output circuit or a communications interface. The processing unit is a processor, a microprocessor, or an integrated circuit integrated on the chip.

When the communications apparatus in this embodiment is a terminal device, refer to a device shown in FIG. 17. In an example, the device may implement a function similar to a function of the processor 1510 in FIG. 15. In FIG. 17, the device includes a processor 1710, a data sending processor 1720, and a data receiving processor 1730. The processing module 1420 in the foregoing embodiment may be the processor 1710 in FIG. 17, and completes a corresponding function. The transceiver module 1410 in the foregoing embodiment may be the data sending processor 1720 and/or the data receiving processor 1730 in FIG. 17. Although FIG. 17 shows a channel encoder and a channel decoder, it may be understood that these modules do not constitute a limitation on this embodiment and are merely examples.

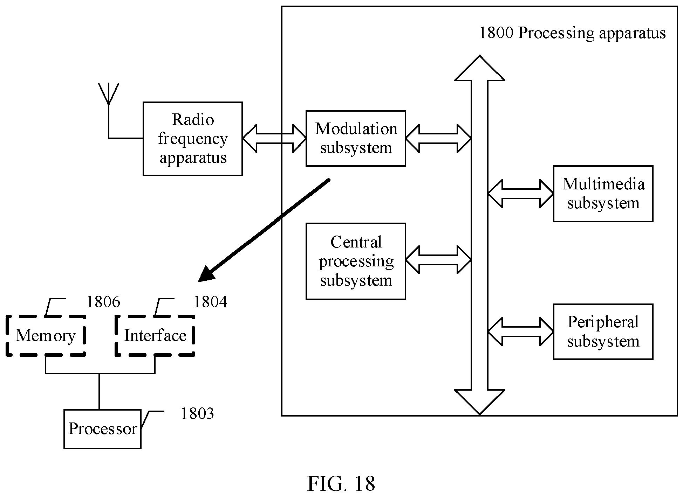

FIG. 18 shows another form of this embodiment. A processing apparatus 1800 includes modules such as a modulation subsystem, a central processing subsystem, and a peripheral subsystem. The communications apparatus in the embodiments may be used as the modulation subsystem in the processing apparatus. Specifically, the modulation subsystem may include a processor 1803 and an interface 1804. The processor 1803 implements a function of the processing module 1420, and the interface 1804 implements a function of the transceiver module 1410. In another variation, the modulation subsystem includes a memory 1806, a processor 1803, and a program that is stored in the memory 1806 and that can be run on the processor. When executing the program, the processor 1803 implements the method on the terminal device side in the foregoing method embodiments. It should be noted that the memory 1806 may be nonvolatile or volatile. The memory 1806 may be located in the modulation subsystem, or may be located in the processing apparatus 1800, provided that the memory 1806 can be connected to the processor 1803.

In another form of this embodiment, a computer-readable storage medium is provided. The computer-readable storage medium stores instructions. When the instructions are executed, the method on the terminal device side in the foregoing method embodiments is performed.

In another form of this embodiment, a computer program product that includes instructions is provided. When the instructions are executed, the method on the terminal device side in the foregoing method embodiments is performed.

It should be understood that, the processor mentioned in this embodiment of this application may be a central processing unit (Central Processing Unit, CPU), or another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or a transistor logical device, a discrete hardware component, or the like. The general-purpose processor may be a microprocessor, or the processor may be any conventional processor or the like.

It may be understood that the memory mentioned in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should further be understood that "first", "second", "third", "fourth", and various numbers in this specification are merely used for differentiation for ease of description, and are not construed as a limitation to the scope of this application.

It should be understood that the term "and/or" in this specification describes only an association relationship between associated objects and indicate that three relationships may exist. For example, A and/or B may indicate the following three cases: Only A exists, both A and B exist, and only B exists. In addition, the character"/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control resource configuration method, wherein a network device pre-configures a plurality of control resource sets on a plurality of sub-bands, the plurality of control resource sets have different priorities, and the method comprises:

   separately performing, by the network device, channel sensing on the plurality of sub-bands, to determine one or more available sub-bands in the plurality of sub-bands; and
   determining, by the network device, one or more to-be-scheduled control resource sets from the plurality of control resource sets based on a priority of each of the plurality of control resource sets, and sending the one or more to-be-scheduled control resource sets on the one or more available sub-bands and within corresponding channel occupancy time, wherein the control resource set carries downlink control information for a terminal device.

2. The method according to claim 1, wherein that a network device pre-configures a plurality of control resource sets on a plurality of sub-bands comprises:

   pre-configuring one or more control resource sets on one of the plurality of sub-bands; and/or
   pre-configuring one control resource set on one or more sub-bands.

**3.** The method according to claim 1, wherein the priority of each of the plurality of control resource sets is updated at a predetermined time interval; or priorities of control resource sets that are in the plurality of control resource sets and that have a same terminal device capability are updated at a predetermined time interval, and the terminal device capability represents a quantity of sub-bands supported by the terminal device.

**4.** The method according to claim 1, wherein quantities of sub-bands supported by terminal devices corresponding to the plurality of control resource sets are different; and that the plurality of control resource sets have different priorities comprises:
the priorities of the plurality of control resource sets are pre-configured based on the quantities of sub-bands supported by the terminal devices corresponding to the control resource sets; and for one or more terminal devices that support a smaller quantity of sub-bands, a priority of a control resource set corresponding to the one or more terminal devices is higher.

**5.** The method according to claim 1, wherein quantities of sub-bands supported by terminal devices corresponding to the plurality of control resource sets are different; and before the determining one or more to-be-scheduled control resource sets from the plurality of control resource sets, the method further comprises:
sending, by the network device, sensing results of the plurality of sub-bands to the terminal devices.

**6.** The method according to claim 1, wherein a plurality of sub-bands that can be configured for the control resource set have different priorities; and
the method further comprises:
determining, by the network device based on a priority of each sub-band that is in the available sub-bands and that can be configured for the control resource set, a sub-band used to send the control resource set.

**7.** The method according to claim 1, wherein the method further comprises:
determining, by the network device, that a pre-configured first sub-band used to send the control resource set is different from a second sub-band that is configured based on a sensing result and used to send the control resource set, and sending, on the second sub-band, downlink data pre-configured on the first sub-band.

**8.** The method according to any one of claims 1 to 7, wherein the downlink control information comprises downlink scheduling information or a system message; and
the determining, by the network device, one or more to-be-scheduled control resource sets from the plurality of control resource sets based on a priority of each of the plurality of control resource sets comprises:
when the plurality of control resource sets comprise a control resource set used to carry the system message, selecting the control resource set used to carry the system message from the plurality of control resource sets, and selecting, from the available sub-bands, a sub-band corresponding to the control resource set used to carry the system message; and
selecting, by the network device from a plurality of remaining control resource sets after selection and based on a priority of each of the plurality of remaining control resource sets, one or more control resource sets for a remaining available sub-band after selection.

**9.** A control resource parsing method, wherein a terminal device pre-obtains configuration information of a network device, the configuration information is used to indicate that the network device pre-configures a plurality of control resource sets on a plurality of sub-bands, the plurality of control resource sets have different priorities, and the method comprises:

    obtaining, by the terminal device, at least a sensing result of a sub-band supported by the terminal device in the plurality of sub-bands, wherein the sensing result is used to determine one or more available sub-bands in the plurality of sub-bands;
    determining, by the terminal device based on at least the sensing result and a priority of each of the plurality of control resource sets, an actually configured sub-band of a control resource set corresponding to the terminal device, and receiving, from the network device within channel occupancy time corresponding to the actually configured sub-band, downlink control information carried on the control resource set; and
    parsing, by the terminal device, the downlink control information.

**10.** The method according to claim 9, wherein quantities of sub-bands supported by terminal devices corresponding to the plurality of control resource sets are different; and the obtaining, by the terminal device, at least a sensing result of a sub-band supported by the terminal device in the plurality of sub-bands comprises:

receiving, by the terminal device, sensing results of the plurality of sub-bands from the network device.

11. The method according to claim 9, wherein a plurality of sub-bands that can be configured for the control resource set have different priorities; and

the determining, by the terminal device based on at least the sensing result and a priority of each of the plurality of control resource sets, an actually configured sub-band of a control resource set corresponding to the terminal device comprises:

based on the priority of each of the plurality of control resource sets and a priority of each sub-band that is in the available sub-bands and that can be configured for the control resource set, determining, by the terminal device, one or more to-be-scheduled control resource sets that are for the available sub-bands and that are determined by the network device from the plurality of control resource sets, and determining a sub-band configured for each of the one or more control resource sets.

12. The method according to claim 9, wherein the method further comprises:

when determining that a pre-configured first sub-band used to send the control resource set corresponding to the terminal device is different from a second sub-band that is configured based on the sensing result and used to send the control resource set, receiving, by the terminal device on the second sub-band, downlink data pre-configured on the first sub-band.

13. The method according to any one of claims 9 to 12, wherein the downlink control information comprises downlink scheduling information or a system message; and

the determining, by the terminal device based on at least the sensing result and a priority of each of the plurality of control resource sets, an actually configured sub-band of a control resource set corresponding to the terminal device comprises:

when the plurality of control resource sets comprise a control resource set used to carry the system message, selecting, by the terminal device, the control resource set used to carry the system message from the plurality of control resource sets, and selecting, from the available sub-bands, a sub-band corresponding to the control resource set used to carry the system message; and

selecting, by the terminal device from a plurality of remaining control resource sets after selection and based on a priority of each of the plurality of remaining control resource sets, one or more control resource sets for a remaining available sub-band after selection.

14. A network device, wherein the network device pre-configures a plurality of control resource sets on a plurality of sub-bands, the plurality of control resource sets have different priorities, and the network device comprises:

a transceiver module, configured to separately perform channel sensing on the plurality of sub-bands, to determine one or more available sub-bands in the plurality of sub-bands; and

a processing module, configured to determine one or more to-be-scheduled control resource sets from the plurality of control resource sets based on a priority of each of the plurality of control resource sets, and send, through the transceiver module and on the one or more available sub-bands, the one or more to-be-scheduled control resource sets within corresponding channel occupancy time, where the control resource set carries downlink control information for a terminal device.

15. The network device according to claim 14, wherein that the network device pre-configures a plurality of control resource sets on a plurality of sub-bands comprises:

pre-configuring one or more control resource sets on one of the plurality of sub-bands; and/or
pre-configuring one control resource set on one or more sub-bands.

16. The network device according to claim 14, wherein the priority of each of the plurality of control resource sets is updated at a predetermined time interval; or priorities of control resource sets that are in the plurality of control resource sets and that have a same terminal device capability are updated at a predetermined time interval, and the terminal device capability represents a quantity of sub-bands supported by the terminal device.

17. The network device according to claim 14, wherein quantities of sub-bands supported by terminal devices corresponding to the plurality of control resource sets are different; and that the plurality of control resource sets have different priorities comprises:

the priorities of the plurality of control resource sets are pre-configured based on the quantities of sub-bands supported by the terminal devices corresponding to the control resource sets; and for one or more terminal devices that support a smaller quantity of sub-bands, a priority of a control resource set corresponding to the one or more terminal devices is higher.

18. The network device according to claim 14, wherein quantities of sub-bands supported by terminal devices corresponding to the plurality of control resource sets are different; and the processing module is further configured to: before determining the one or more to-be-scheduled control resource sets from the plurality of control resource sets, send sensing results of the plurality of sub-bands to the terminal devices through the transceiver module.

19. The network device according to claim 14, wherein a plurality of sub-bands that can be configured for the control resource set have different priorities; and
the processing module is further configured to determine, based on a priority of each sub-band that is in the available sub-bands and that can be configured for the control resource set, a sub-band used to send the control resource set.

20. The network device according to claim 14, wherein the processing module is further configured to: determine that a pre-configured first sub-band used to send the control resource set is different from a second sub-band that is configured based on a sensing result and used to send the control resource set, and send, on the second sub-band through the transceiver module, downlink data pre-configured on the first sub-band.

21. The network device according to any one of claims 14 to 20, wherein the downlink control information comprises downlink scheduling information or a system message; and
the processing module is specifically configured to: when the plurality of control resource sets comprise a control resource set used to carry the system message, select the control resource set used to carry the system message from the plurality of control resource sets; select, from the available sub-bands, a sub-band corresponding to the control resource set used to carry the system message; and select, from a plurality of remaining control resource sets after selection and based on a priority of each of the plurality of remaining control resource sets, one or more control resource sets for a remaining available sub-band after selection.

22. A terminal device, wherein the terminal device pre-obtains configuration information of a network device, the configuration information is used to indicate that the network device pre-configures a plurality of control resource sets on a plurality of sub-bands, the plurality of control resource sets have different priorities, and the terminal device comprises:

a transceiver module, configured to obtain at least a sensing result of a sub-band supported by the terminal device in the plurality of sub-bands, wherein the sensing result is used to determine one or more available sub-bands in the plurality of sub-bands; and
a processing module, configured to: determine, based on at least the sensing result and a priority of each of the plurality of control resource sets, an actually configured sub-band of a control resource set corresponding to the terminal device, receive, from the network device through the transceiver module and within channel occupancy time corresponding to the actually configured sub-band, downlink control information carried on the control resource set, and parse the downlink control information.

23. The terminal device according to claim 22, wherein quantities of sub-bands supported by terminal devices corresponding to the plurality of control resource sets are different; and the transceiver module is specifically configured to receive sensing results of the plurality of sub-bands from the network device.

24. The terminal device according to claim 22, wherein a plurality of sub-bands that can be configured for the control resource set have different priorities; and
the processing module is specifically configured to: based on the priority of each of the plurality of control resource sets and a priority of each sub-band that is in the available sub-bands and that can be configured for the control resource set, determine one or more to-be-scheduled control resource sets that are for the available sub-bands and that are determined by the network device from the plurality of control resource sets, and determine a sub-band configured for each of the one or more control resource sets.

25. The terminal device according to claim 22, wherein the processing module is further configured to: when determining that a pre-configured first sub-band used to send the control resource set corresponding to the terminal device is different from a second sub-band that is configured based on the sensing result and used to send the control resource set, receive, on the second sub-band through the transceiver module, downlink data pre-configured on the first sub-band.

26. The terminal device according to any one of claims 22 to 25, wherein the downlink control information comprises downlink scheduling information or a system message; and
the processing module is specifically configured to: when the plurality of control resource sets comprise a control resource set used to carry the system message, select, by the terminal device, the control resource set used to carry the system message from the plurality of control resource sets; select, from the available sub-bands, a sub-band corresponding to the control resource set used to carry the system message; and select, from a plurality of remaining control resource sets after selection and based on a priority of each of the plurality of remaining control resource sets, one or more control resource sets for a remaining available sub-band after selection.

27. A communications apparatus, comprising a memory, a processor, and a program that is stored in the memory and that can run on the processor, wherein when the processor executes the program, the method according to any one of claims 1 to 8 is implemented.

28. A communications apparatus, comprising a memory, a processor, and a program that is stored in the memory and that can run on the processor, wherein when the processor executes the program, the method according to any one of claims 9 to 13 is implemented.

29. A computer-readable storage medium, comprising instructions, wherein when the instructions are run on a computer, the computer is enabled to perform the method according to any one of claims 1 to 13.

FIG. 1

```
┌─────────────────────┐                              ┌─────────────────────┐
│   Network device    │                              │   Terminal device   │
└─────────────────────┘                              └─────────────────────┘
```

┌─────────────────────────────┐
│ 201: Pre-configure a plurality of │
│ control resource sets on a │
│ plurality of sub-bands, where the │
│ plurality of control resource sets │
│ have different priorities │
└─────────────────────────────┘

202: Send a priority of each control resource set and a
correspondence between the plurality of sub-bands
and the plurality of control resource sets

┌─────────────────────────────┐
│ 203: Separately perform channel │    ◄── Sensing ──
│ sensing on the plurality of sub- │
│ bands, to determine one or more │    ◄── Sensing ──
│ available sub-bands in the │                              ┌─────────────────────────────┐
│ plurality of sub-bands │                                  │ 204: Obtain at least a sensing result of │
└─────────────────────────────┘       ── Sensing ──►        │ a sub-band supported by the terminal │
                                                             │ device in the plurality of sub-bands, │
┌─────────────────────────────┐       ── Sensing ──►        │ where the sensing result is used to │
│ 205: Determine one or more to- │                          │ determine the one or more available │
│ be-scheduled control resource │                           │ sub-bands in the plurality of sub- │
│ sets from the plurality of control │                       │ bands │
│ resource sets based on the │                              └─────────────────────────────┘
│ priority of each of the plurality of │
│ control resource sets │                                   ┌─────────────────────────────┐
└─────────────────────────────┘                             │ 206: Determine, based on at least the │
                                                             │ sensing result, an actually configured │
                                                             │ sub-band of a control resource set │
                                                             │ corresponding to the terminal device │
                                                             └─────────────────────────────┘

205: Send downlink control information

                                                             ┌─────────────────────────────┐
                                                             │ 207: The terminal device parses the │
                                                             │ downlink control information │
                                                             └─────────────────────────────┘

FIG. 2

FIG. 3

Primary carrier

Wi-Fi PPDU

Secondary carrier

Wi-Fi PPDU

Secondary carrier

Wi-Fi PPDU

Secondary carrier

Wi-Fi PPDU

Wi-Fi PPDU

Busy ECCA slot    Idle ECCA slot    Idle initial CCA slot    Busy initial CCA slot

Occupied by an eNB    Occupied by a Wi-Fi node contending with the eNB

FIG. 4

PDSCH of a UE 1

PDSCH of a UE 2

CORESET 1

CORESET 2

CORESET 3

← Broadband CC →

Sub-band 0

Sub-band 1

Sub-band 2

Sub-band 3

FIG. 5

FIG. 6

FIG. 7

EP 3 866 534 A1

FIG. 8

Sub-band 0 ⎯⎯⎯⎯⎯⎯⎯⎯⎯⎯⎯⎯⎯⎯

Sub-band 1

Sub-band 2

Sub-band 3 ⎯⎯⎯⎯⎯⎯⎯⎯⎯⎯⎯⎯⎯⎯

Broadband CC

| 3 | CORESET 1 | | PDSCH of a UE 1 |
| 2 | CORESET 2 | | PDSCH of a UE 2 |
| 1 | CORESET 3 | | |

FIG. 9

Sub-band 0

Sub-band 1

Sub-band 2

Sub-band 3

Broadband CC

| 2 | CORESET 1 | | PDSCH of a UE 3 |
| 1 | CORESET 2 | | PDSCH of a UE 2 |
| 3 | CORESET 3 | | |

FIG. 10

Mapping of pre-
scheduled time-
frequency resources

Sub-band 0

Sub-band 1

Sub-band 2

Sub-band 3

Mapping of time-
frequency resources
actually sent by a
gNB

Sub-band 0

Sub-band 1

Sub-band 2

Sub-band 3

Broadband CC

Broadband CC

| | | | |
|---|---|---|---|
| 2 | CORESET 1 | | PDSCH of a UE 1 |
| 1 | CORESET 2 | | PDSCH of a UE 2 |
| CSS | CORESET 3 | | PDSCH of a system message |

FIG. 11

Network device 1200

| Transceiver module 1210 | — | Processing module 1220 |

FIG. 12

Network device 1300

| Memory 1320 | — | Processor 1310 | — | Transceiver 1330 |

FIG. 13

FIG. 14

FIG. 15

Antenna

Radio frequency circuit

1610

Memory

Processor

1620

Input/Output apparatus

FIG. 16

Data sending processor 1720

Channel encoder

Modulator

Symbol generation module

Processor 1710

Data receiving processor 1730

Channel decoder

Demodulator

Channel estimation module

FIG. 17

FIG. 18

Network device

301: Configure a search space and/or a CORESET of the terminal device

302: Send first signaling and/or second signaling

Terminal device

303: Receive the first signaling and/or the second signaling, and detect a PDCCH in the search space

FIG. 19

FIG. 20

FIG. 21

Boundary of an LBT
sub-band (Boundary
of LBT subband)

Start boundary of a monitoring
location in a unit of CRBG (Start
of ML in the unit of CRB group)

| 6 RBs | 6 RBs | 6 RBs | 6 RBs | 6 RBs | 6 RBs | 6 RBs |

ML

CRB
#54

CRB
#60

CRB
#66

CRB
#72

CRB
#78

CRB
#84

CRB
#90

offset

Start boundary after offset

FIG. 22

# EP 3 866 534 A1

## INTERNATIONAL SEARCH REPORT

International application No.

**PCT/CN2019/110588**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 控制资源, 集, 优先级, 子带, 侦听, 检测, 下行控制信息, 多个, control, resource, set, CORESET, priority, subband, detect, downlink control information, DCI, multiple

### C. DOCUMENTS CONSIDERED TO BE RELEVANT

| Category* | Citation of document, with indication, where appropriate, of the relevant passages | Relevant to claim No. |
|---|---|---|
| A | MEDIATEK INC. "On Downlink Transmission Detection in NR-U" *3GPP TSG RAN WG1 Meeting #94 R1-1808272,* 24 August 2018 (2018-08-24), sections 3-4 | 1-29 |
| A | CN 107659994 A (YULONG COMPUTER TELECOMMUNICATION SCIENTIFIC (SHENZHEN) CO., LTD.) 02 February 2018 (2018-02-02) entire document | 1-29 |
| A | CN 108633052 A (ZTE CORPORATION) 09 October 2018 (2018-10-09) entire document | 1-29 |
| A | US 2018176059 A1 (MEDIATEK SINGAPORE PTE. LTD.) 21 June 2018 (2018-06-21) entire document | 1-29 |
| A | WO 2018139892 A1 (SAMSUNG ELECTRONICS CO., LTD.) 02 August 2018 (2018-08-02) entire document | 1-29 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 December 2019** | **30 December 2019** |

| Name and mailing address of the ISA/CN | Authorized officer |
|---|---|
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/110588**

| Patent document cited in search report | | | Publication date (day/month/year) | Patent family member(s) | | | Publication date (day/month/year) |
|---|---|---|---|---|---|---|---|
| CN | 107659994 | A | 02 February 2018 | None | | | |
| CN | 108633052 | A | 09 October 2018 | WO | 2018171807 | A1 | 27 September 2018 |
| US | 2018176059 | A1 | 21 June 2018 | TW | 201830999 | A | 16 August 2018 |
| | | | | CN | 108206730 | A | 26 June 2018 |
| WO | 2018139892 | A1 | 02 August 2018 | KR | 20190103458 | A | 04 September 2019 |
| | | | | CN | 108365928 | A | 03 August 2018 |

Form PCT/ISA/210 (patent family annex) (January 2015)